# EUROPEAN PATENT APPLICATION

(11) **EP 4 277 395 A1**
(43) Date of publication of application: **15.11.2023**
(21) Application number: 21918652.5
(22) Date of filing: 15.01.2021
(51) Int. Cl.: H04W 72/04

(54) **DISCONTINUOUS RECEPTION CONTROL METHOD AND APPARATUS**

(71) Applicant: Huawei Technologies Co., Ltd., Shenzhen, Guangdong 518129 (CN)
(72) Inventor: LIU, Nannan, Shenzhen, Guangdong 518129 (CN); CHANG, Junren, Shenzhen, Guangdong 518129 (CN)
(74) Representative: Pfenning, Meinig & Partner mbB
(86) International application number: PCT/CN2021/072333
(87) International publication number: WO 2022/151448

(57) **Abstract**

Embodiments of this application provide a discontinuous reception control method and an apparatus that relate to the field of communication technologies, to resolve a problem that a communication apparatus cannot receive data when a transmission manner on a network side dynamically changes. The method is as follows: receiving first control information transmitted in a unicast manner, where the first control information is for scheduling first data transmitted in a multicast manner; and performing, by a communication apparatus, any one or more of the following actions: starting or restarting a first timer, where the first timer indicates duration after newly transmitted control information or newly transmitted data is scheduled; stopping a second timer, or starting or restarting a second timer, where the second timer indicates duration in which the communication apparatus receives retransmitted data; and starting or restarting a third timer, where the third timer indicates waiting duration before the communication apparatus receives the retransmitted data, where the timers are timers corresponding to DRX associated with multicast. Embodiments of this application are used for processing control information and/or data based on DRX.

## Description

### TECHNICAL FIELD

This application relates to the field of communication technologies, and in particular, to a discontinuous reception (Discontinuous Reception, DRX) control method and an apparatus.

### BACKGROUND

A multimedia broadcast multicast service (multimedia broadcast multicast service, MBMS) or a multicast broadcast service (multicast and broadcast service, or multicast/broadcast service, or multicast-broadcast service, MBS) may effectively use communication resources, and provides a point-to-multipoint service, in a communication network, in which a data source sends data to a plurality of users, so that resource sharing is implemented, and resource utilization, especially utilization of air interface resources, is improved. Generally, in an MBMS or MBS scenario, information may be broadcast to all users, or may be sent to and viewed by a group of charged subscribers. This helps an operator carry out a plurality of commercial applications such as multimedia advertisement, free and pay TV channels, and multimedia message group sending.

For the multicast service, a user equipment (User Equipment, UE) side needs to support a DRX mechanism to save energy. Currently, there is no effective method to ensure that the UE can receive multicast data.

### SUMMARY

Embodiments of this application provide a discontinuous reception control method and an apparatus, and resolve a problem that a communication apparatus cannot receive data when a transmission manner on a network side dynamically changes.

To achieve the foregoing objectives, the following technical solutions are used in embodiments of this application.

According to a first aspect, a DRX control method is provided. The method includes: receiving, by a communication apparatus, first control information transmitted in a multicast manner, where the first control information is for scheduling first data transmitted in the multicast manner; and/or receiving, by the communication apparatus, the first data, where the first data is transmitted in a unicast manner; and performing, by the communication apparatus, any one or more of the following actions: starting or restarting a first timer, where the first timer indicates duration after newly transmitted control information or newly transmitted data is scheduled; stopping a second timer, or starting or restarting a second timer, where the second timer indicates duration in which the communication apparatus receives retransmitted data; and starting or restarting a third timer, where the third timer indicates waiting duration before the communication apparatus receives the retransmitted data, where the first timer, the second timer, and the third timer are timers corresponding to DRX associated with multicast.

In this way, the communication apparatus receives the first control information and/or the data (corresponding to a first HARQ process) transmitted in the unicast manner, and a network device may subsequently transmit other control information and/or data in the multicast manner, or may retransmit the data in the multicast manner. To ensure that the communication apparatus can receive control information and/or data subsequently transmitted by the network device in the multicast manner, the communication apparatus may start a first timer (corresponding to a second HARQ process) corresponding to DRX associated with multicast. In this way, if the network device transmits other control information and/or data or retransmits the data in the multicast manner within running duration of the first timer, it can be ensured that the communication apparatus can receive the control information and/or the data, or in other words, it can be avoided that the communication apparatus is in a sleep state and cannot receive the control information and/or the data, so that reliability of data transmission is improved.

Alternatively, the second timer corresponding to DRX associated with multicast (for example, corresponding to the first HARQ process) may be running (for example, the second timer corresponding to DRX associated with multicast may be started or restarted by the communication apparatus to ensure that the communication apparatus can receive retransmitted data that is subsequently transmitted by the network device in the multicast manner (or a C+G transmission manner) because the communication apparatus previously receives control information and/or data X (corresponding to the first HARQ process) transmitted in the multicast manner or the unicast manner), and the communication apparatus receives control information and/or data Y (for example, newly transmitted data or retransmitted data, corresponding to the second HARQ process) transmitted in the unicast manner. To save energy of the communication apparatus, the second timer corresponding to DRX associated with multicast may be stopped. It may be understood that, if the data Y is retransmitted data of the data X, it indicates that retransmission of the data X is received, and the second timer corresponding to DRX associated with multicast may be stopped. If the data Y is newly transmitted data, it indicates that the network device no longer retransmits the data X for the communication apparatus, and the second timer corresponding to DRX associated with multicast may be stopped.

Alternatively, the communication apparatus receives control information and/or data transmitted in the unicast manner, or receives data transmitted in a configured transmission manner, and the network device may subsequently transmit other control information and/or data in the multicast manner (or the unicast manner), or may retransmit the data in the multicast manner (or the unicast manner). To ensure that the communication apparatus can receive the control information and/or data subsequently transmitted by the network device in the multicast manner (or the unicast manner), the communication apparatus may start or restart the third timer corresponding to DRX associated with multicast. Optionally, after the third timer expires, the communication apparatus starts or restarts the second timer corresponding to DRX associated with multicast. In this way, if the network device transmits other control information and/or data or retransmits the data in the multicast manner (or the unicast manner) within running duration of the second timer (and/or running duration of the third timer), it can be ensured that the communication apparatus can receive the control information and/or the data, or in other words, it can be avoided that the communication apparatus is in a sleep state and cannot receive the control information and/or the data, so that reliability of data transmission is improved. In addition, the communication apparatus starts or restarts the third timer corresponding to DRX associated with multicast, and after the third timer expires, starts or restarts the second timer corresponding to DRX associated with multicast. This can also avoid listening to retransmission of the data within running duration of the third timer, and facilitate energy saving of the communication apparatus.

In a possible design, the starting or restarting a first timer includes: when the first data is newly transmitted data, starting or restarting the first timer. To be specific, the first data transmitted in the unicast manner is previously received, and subsequently, it is likely that newly transmitted data continues to be received. Therefore, to ensure reception of the subsequent data, the first timer may be started or restarted.

In a possible design, the starting or restarting a third timer includes: sending, by the communication apparatus, first feedback information, where the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and starting or restarting, by the communication apparatus, the third timer. In this way, the communication apparatus starts or restarts the third timer, and after the third timer expires, the communication apparatus may start or restart the second timer corresponding to DRX associated with multicast. This can also avoid listening to retransmission of the data within running duration of the third timer, and facilitate energy saving of the communication apparatus.

In a possible design, the method further includes: performing, by the communication apparatus, any one or more of the following actions: starting or restarting a fourth timer, where the fourth timer indicates duration after newly transmitted control information or newly transmitted data is scheduled; stopping a fifth timer, or starting or restarting a fifth timer, where the fifth timer indicates duration in which the communication apparatus receives retransmitted data; and starting or restarting a sixth timer, where the sixth timer indicates waiting duration before the communication apparatus receives the retransmitted data, where the fourth timer, the fifth timer, and the sixth timer are all timers corresponding to DRX associated with unicast.

For example, the communication apparatus receives control information and/or data transmitted in the unicast manner, or receives data transmitted in a configured transmission manner, and the network device may subsequently transmit other control information and/or data in the unicast manner, or may retransmit the data in the unicast manner. To ensure that the communication apparatus can receive control information and/or data subsequently transmitted by the network device in the unicast manner, the communication apparatus may start the fourth timer corresponding to DRX associated with unicast. In this way, if the network device transmits other control information and/or data or retransmits the data in the unicast manner within running duration of the fourth timer, it can be ensured that the communication apparatus can receive the control information and/or the data, or in other words, it can be avoided that the communication apparatus is in a sleep state and cannot receive the control information and/or the data, so that reliability of data transmission is improved.

Alternatively, for example, the fifth timer corresponding to DRX associated with unicast (for example, corresponding to a first HARQ process) may be running (for example, the fifth timer corresponding to DRX associated with unicast may be started or restarted by the communication apparatus to ensure that the communication apparatus can receive retransmitted data that is subsequently transmitted by the network device in the unicast manner because the communication apparatus previously receives control information and/or data X (corresponding to the first HARQ process) transmitted in the multicast manner or the unicast manner, or receives data X (corresponding to the first HARQ process) transmitted in a configured transmission manner), and the communication apparatus receives control information and/or data Y (for example, newly transmitted data or retransmitted data, corresponding to the first HARQ process) transmitted in the unicast manner, or receives data Y (for example, newly transmitted data or retransmitted data, corresponding to the first HARQ process) transmitted in a configured transmission manner. To save energy of the communication apparatus, the fifth timer corresponding to DRX associated with unicast may be stopped. It may be understood that, if the data Y is retransmitted data of the data X, it indicates that retransmission of the data X is received, and the fifth timer corresponding to DRX associated with unicast may be stopped. If the data Y is newly transmitted data, it indicates that the network device no longer retransmits the data X for the communication apparatus, and the fifth timer corresponding to DRX associated with unicast may be stopped.

Alternatively, the communication apparatus receives the control information and/or data transmitted in the unicast manner, and the network device may subsequently transmit other control information and/or data in the unicast manner, or may retransmit the data in the unicast manner. To ensure that the communication apparatus can receive the control information and/or data subsequently transmitted by the network device in the unicast manner, the communication apparatus may start or restart the sixth timer corresponding to DRX associated with unicast. Optionally, after the sixth timer expires, the communication apparatus starts or restarts the fifth timer corresponding to DRX associated with unicast. In this way, if the network device transmits other control information and/or data or retransmits the data in the unicast manner within running duration of the fifth timer (and/or running duration of the sixth timer), it can be ensured that the communication apparatus can receive the control information and/or the data, or in other words, it can be avoided that the communication apparatus is in a sleep state and cannot receive the control information and/or the data, so that reliability of data transmission is improved. In addition, the communication apparatus starts or restarts the sixth timer corresponding to DRX associated with unicast, and after the sixth timer expires, starts or restarts the fifth timer corresponding to DRX associated with unicast. This can also avoid listening to retransmission of the data within running duration of the sixth timer, and facilitate energy saving of the communication apparatus.

In a possible design, any one or more of the first control information, the first data, the second timer, and the third timer correspond to the first hybrid automatic repeat request HARQ process; and/or any one or more of the first control information, the first data, the fifth timer, and the sixth timer correspond to the first HARQ process.

According to a second aspect, a DRX control method is provided. The method includes: receiving, by a communication apparatus, first control information transmitted in a multicast manner, where the first control information is for scheduling first data transmitted in the multicast manner; and/or receiving, by the communication apparatus, the first data, where the first data is transmitted in a unicast manner; and performing, by the communication apparatus, any one or more of the following actions: starting or restarting a fourth timer, where the fourth timer indicates duration after a newly transmitted control channel or newly transmitted data is scheduled; and stopping a fifth timer, or starting or restarting a fifth timer, where the fifth timer indicates duration in which the communication apparatus receives retransmitted data, where the fourth timer and the fifth timer are both timers in DRX associated with a unicast service.

In this way, the communication apparatus receives the control information and/or data transmitted in the multicast manner, and the network device may subsequently transmit other control information and/or data in the unicast manner, or may retransmit the data in the unicast manner. To ensure that the communication apparatus can receive control information and/or data subsequently transmitted by the network device in the unicast manner, the communication apparatus may start the fourth timer corresponding to DRX associated with unicast. In this way, if the network device transmits other control information and/or data or retransmits the data in the unicast manner within running duration of the fourth timer, it can be ensured that the communication apparatus can receive the control information and/or the data, or in other words, it can be avoided that the communication apparatus is in a sleep state and cannot receive the control information and/or the data, so that reliability of data transmission is improved.

Alternatively, the fifth timer corresponding to DRX associated with unicast (for example, corresponding to a first HARQ process) may be running (for example, the fifth timer corresponding to DRX associated with unicast may be started or restarted by the communication apparatus to ensure that the communication apparatus can receive retransmitted data that is subsequently transmitted by the network device in the unicast manner because the communication apparatus previously receives control information and/or data X (corresponding to the first HARQ process) transmitted in the multicast manner or the unicast manner, or receives data X (corresponding to the first HARQ process) transmitted in a configured transmission manner), and the communication apparatus receives control information and/or data Y (for example, newly transmitted data or retransmitted data, corresponding to the first HARQ process) transmitted in the unicast manner, or receives data Y (for example, newly transmitted data or retransmitted data, corresponding to the first HARQ process) transmitted in a configured transmission manner. To save energy of the communication apparatus, the fifth timer corresponding to DRX associated with unicast may be stopped. It may be understood that, if the data Y is retransmitted data of the data X, it indicates that retransmission of the data X is received, and the fifth timer corresponding to DRX associated with unicast may be stopped. If the data Y is newly transmitted data, it indicates that the network device no longer retransmits the data X for the communication apparatus, and the fifth timer corresponding to DRX associated with unicast may be stopped.

In a possible design, the starting or restarting a fourth timer includes: when the communication apparatus determines that the first data is newly transmitted data, starting or restarting the fourth timer.

In a possible design, the method further includes: performing, by a communication apparatus, any one or more of the following actions: starting or restarting a first timer, where the first timer indicates duration after a newly transmitted control channel or newly transmitted data is scheduled; and stopping a second timer, or starting or restarting a second timer, where the second timer indicates duration in which the communication apparatus receives retransmitted data, and the first timer and the second timer are timers corresponding to DRX associated with multicast. Beneficial effects herein are similar to beneficial effects of the first aspect. To be specific, running of a timer in the multicast manner may be further controlled.

In a possible design, the first data and the fifth timer both correspond to a same hybrid automatic repeat request HARQ process.

According to a third aspect, a communication apparatus is provided, including: a transceiver, configured to receive first control information transmitted in a multicast manner, where the first control information is for scheduling first data transmitted in the multicast manner; and/or a transceiver, configured to receive the first data, where the first data is transmitted in a unicast manner; and a processor, configured to perform any one or more of the following actions: starting or restarting a first timer, where the first timer indicates duration after newly transmitted control information or newly transmitted data is scheduled; stopping a second timer, or starting or restarting a second timer, where the second timer indicates duration in which the communication apparatus receives retransmitted data; and starting or restarting a third timer, where the third timer indicates waiting duration before the communication apparatus receives the retransmitted data, where the first timer, the second timer, and the third timer are timers corresponding to DRX associated with multicast. For beneficial effects of the third aspect, refer to the beneficial effects of the first aspect.

In a possible design, the processor is configured to: when the first data is newly transmitted data, start or restart the first timer.

In a possible design, the transceiver is configured to send first feedback information, where the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and the processor is configured to start or restart the third timer.

In a possible design, the processor is further configured to perform any one or more of the following actions: starting or restarting a fourth timer, where the fourth timer indicates duration after newly transmitted control information or newly transmitted data is scheduled; stopping a fifth timer, or starting or restarting a fifth timer, where the fifth timer indicates duration in which the communication apparatus receives retransmitted data; and starting or restarting a sixth timer, where the sixth timer indicates waiting duration before the communication apparatus receives the retransmitted data, where the fourth timer, the fifth timer, and the sixth timer are all timers corresponding to DRX associated with unicast.

In a possible design, any one or more of the first control information, the first data, the second timer, and the third timer correspond to the first hybrid automatic repeat request HARQ process; and/or any one or more of the first control information, the first data, the fifth timer, and the sixth timer correspond to the first HARQ process.

According to a fourth aspect, a communication apparatus is provided, including: a transceiver, configured to receive first control information transmitted in a multicast manner, where the first control information is for scheduling first data transmitted in the multicast manner; and/or a communication apparatus receives the first data, where the first data is transmitted in a unicast manner; and a processor, configured to perform any one or more of the following actions: starting or restarting a fourth timer, where the fourth timer indicates duration after a newly transmitted control channel or newly transmitted data is scheduled; and stopping a fifth timer, or starting or restarting a fifth timer, where the fifth timer indicates duration in which the communication apparatus receives retransmitted data, where the fourth timer and the fifth timer are both timers in DRX associated with a unicast service. For beneficial effects of the fourth aspect, refer to the beneficial effects of the second aspect.

In a possible design, the processor is configured to: when determining that the first data is newly transmitted data, start or restart the fourth timer.

In a possible design, the transceiver is further configured to send first feedback information, where the first feedback information indicates that the communication apparatus successfully receives or fails to receive the first data; or at first feedback time or after first feedback time, the first feedback time is maximum duration in which the communication apparatus sends a data feedback to a network device; and the processor is further configured to start or restart a sixth timer.

In a possible design, the processor is further configured to perform any one or more of the following actions: starting or restarting a first timer, where the first timer indicates duration after a newly transmitted control channel or newly transmitted data is scheduled; and stopping a second timer, or starting or restarting a second timer, where the second timer indicates duration in which the communication apparatus receives retransmitted data, and the first timer and the second timer are timers corresponding to DRX associated with multicast.

In a possible design, the first data and the fifth timer both correspond to a same hybrid automatic repeat request HARQ process.

According to a fifth aspect, a discontinuous reception DRX control method is provided, where the method includes: receiving, by a communication apparatus, first control information and/or first data, where the first control information is for scheduling the first data, and the first data is multicast data or data transmitted in a multicast manner; and/or determining, by the communication apparatus, that a first timer expires, where the first timer indicates waiting duration before the communication apparatus receives retransmitted data; and starting or restarting, by the communication apparatus, a second timer, where the second timer indicates duration in which the communication apparatus receives the retransmitted data. In this way, in the multicast manner, regardless of whether the first data is successfully received, the second timer is started, and an active period of a communication apparatus that feeds back an ACK (or that the reception succeeds) is aligned with an active period of a communication apparatus that feeds back a NACK (or that the reception fails). In this way, within running duration of a retransmission timer, if a sending device (for example, a network device or a terminal device) sends newly transmitted data, the communication apparatus that feeds back the ACK (or that the reception succeeds) may also receive the newly transmitted data because the communication apparatus that feeds back the ACK is in the active period.

In a possible design, before the determining, by the communication apparatus, that a first timer expires, the method further includes: successfully receiving, by the communication apparatus, first downlink control information or the first data, where the first data is multicast data or data transmitted in a multicast manner; and starting, by the communication apparatus, the first timer. In other words, the communication apparatus that feeds back the ACK also starts the first timer, to keep consistent with active time of the communication apparatus that feeds back the NACK, so that data transmission efficiency is improved.

In a possible design, the method further includes: receiving, by the communication apparatus, first information, where the first information instructs the communication apparatus to receive the first control information and/or the first data; and/or determining, by the communication apparatus, that the first timer expires, and starting or restarting, by the communication apparatus, the second timer. In other words, whether to start the first timer may be determined by a network device side.

According to a sixth aspect, a DRX control method is provided. The method includes: determining, by a network device, that a first timer on a communication apparatus side is running, where the first timer indicates duration in which the communication apparatus receives retransmitted data; and determining, by the network device, not to send first control information and/or first data, where the first control information is for scheduling the first data, and the first data is multicast data or data transmitted in a multicast manner.

The network device determines that newly transmitted multicast data or data transmitted in a multicast manner (for example, a PDSCH scrambled by using a G-RNTI) needs to be sent to all communication apparatuses in multicast. If at least one communication apparatus in the multicast runs under a first timer, considering that at least one communication apparatus in the multicast may not run under the first timer but is in a sleep period (where other timers related to active time corresponding to DRX associated with multicast are not running), in this case, the network device may not send the newly transmitted data to all the communication apparatuses in the multicast. On the contrary, if none of the communication apparatuses in the multicast runs under a RetransmissionTimer, the network device may consider that all the communication apparatuses are in an active period, that is, active periods of all the communication apparatuses are aligned. In this case, the network device sends newly transmitted data to the communication apparatus in the multicast only when all the communication apparatuses in the multicast are in the active period, so that all the communication apparatuses in the multicast can receive the newly transmitted data.

In a possible design, before the network device determines not to send new data to the communication apparatus, the method further includes: determining, by the network device, that none of a second timer, a third timer, and a fourth timer of the communication apparatus is running, where the second timer indicates duration in which the communication apparatus receives the retransmitted data, the third timer indicates waiting duration before the communication apparatus receives the control information, and the fourth timer indicates duration in which the communication apparatus waits to receive the control information after being woken up. That is, the network device does not send the new data only when the first timer is running.

According to a seventh aspect, a discontinuous reception DRX control method is provided. The method includes: determining, by a communication apparatus, that a first downlink BWP does not include a first resource, where the first resource is a resource for transmitting control information and/or data in a multicast manner, a common frequency resource or a common frequency resource corresponding to multicast, or a resource used for a common physical downlink control channel and a common physical downlink data channel, and the first downlink BWP is a downlink BWP activated by the communication apparatus, or the communication apparatus is to switch to the first downlink BWP; and controlling, by the communication apparatus, first DRX to be in a sleep period, or not listening to control information associated with multicast, where the first DRX is associated with multicast.

Therefore, when the communication apparatus initiates random access, if the communication apparatus determines that a downlink BWP to be switch to or a downlink BWP that has been switched to does not include the first resource, the communication apparatus may enter a sleep period, or may not listen to downlink control information associated with multicast, to skip receiving the downlink control information or downlink data transmitted in a multicast manner. In this way, the communication apparatus can be prevented from listening to unnecessary downlink control information, and power consumption is reduced by using the communication apparatus.

In a possible design, the controlling, by the communication apparatus, first DRX to be in a sleep period includes: stopping, by the communication apparatus, a timer corresponding to the first DRX.

In a possible design, before determining, by a communication apparatus, that a first downlink BWP does not include a resource for transmitting DCI or data in a multicast manner, the method further includes: switching, by the communication apparatus, to the first downlink BWP. In other words, when the communication apparatus has switched to the first BWP, if it is determined that the first downlink BWP does not include the first resource, the communication apparatus controls the first DRX to be in the sleep period, or does not listen to the control information associated with multicast, where the first DRX is associated with multicast, to reduce power consumption.

In a possible design, the method further includes: initiating, by the communication apparatus, random access, and switching, by the communication apparatus, to the first downlink BWP, where the first downlink BWP is a downlink BWP corresponding to an active uplink BWP; the first downlink BWP is an initial downlink BWP, and a first uplink BWP is an initial uplink BWP; or an identifier of the first downlink BWP is the same as an identifier of the first uplink BWP.

In a possible design, the method further includes: sending, by the communication apparatus, a message 3 in a random access procedure, where the message 3 is used for scheduled transmission and carries an identifier of the communication apparatus; or determining, by the communication apparatus, that random access succeeds; or switching, by the communication apparatus, to a second downlink BWP, where the second BWP includes the first resource; and controlling, by the communication apparatus, the first DRX to be in an active period, or listening, based on the first DRX, to downlink control information for scheduling multicast data. In this way, the communication apparatus does not need to be always in the sleep period and does not need to always not listen to the control channel, and continues to receive the downlink data based on the first DRX.

In a possible design, the controlling, by the communication apparatus, the first DRX to be in an active period includes: starting, by the communication apparatus, the timer corresponding to the first DRX.

In a possible design, the timer corresponding to the first DRX includes any one or more of the following: a first timer, a second timer, a third timer, and a fourth timer. The first timer indicates duration after newly transmitted control information or newly transmitted data is scheduled. The second timer indicates duration in which the communication apparatus receives the retransmitted data. The third timer indicates waiting duration before the communication apparatus receives the retransmitted data. Timing duration of the fourth timer indicates duration in which the communication apparatus waits to receive the control information after being woken up.

In a possible design, the downlink control information for scheduling multicast data includes any one or more of the following: downlink control information transmitted in a multicast manner, downlink control information for scheduling data transmitted in the multicast manner, and downlink control information for scheduling multicast data transmitted in a unicast manner.

According to an eighth aspect, a discontinuous reception DRX control method is provided. The method includes: switching, by a communication apparatus, from a first downlink BWP to a second downlink BWP, where the first BWP and the second BWP are for transmitting downlink control information or data in a unicast manner; and controlling, by the communication apparatus, first DRX to be in a sleep period, or to stop listening to downlink control information for scheduling unicast data, to stop receiving the downlink control information or downlink data transmitted in the unicast manner, where the first DRX is associated with unicast.

In this way, when the communication apparatus initiates random access, if the communication apparatus determines a downlink BWP to be switched to or a downlink BWP that has been switched to, the communication apparatus may enter a sleep period, or may not listen to downlink control information associated with unicast, to skip receiving the downlink control information or downlink data transmitted in the unicast manner. This can prevent the communication apparatus from listening to unnecessary downlink control information, and facilitate reducing power consumption of the communication apparatus.

In a possible design, the controlling, by the communication apparatus, first DRX to be in a sleep period includes: stopping, by the communication apparatus, a timer corresponding to the first DRX.

In a possible design, the switching, by a communication apparatus, from a first downlink BWP to a second downlink BWP includes: initiating, by the communication apparatus, contention-based random access, and switching, by the communication apparatus, from the first BWP to the second downlink BWP, where the second downlink BWP is a downlink BWP corresponding to an active first uplink BWP; the second downlink BWP is an initial downlink BWP, and the first uplink BWP is an initial uplink BWP; or an identifier of the second downlink BWP is the same as an identifier of the active uplink BWP.

In a possible design, the method further includes: sending, by the communication apparatus, a message 3 in a random access procedure, where the message 3 is used for scheduled transmission and carries an identifier of the communication apparatus; and controlling, by the communication apparatus, the first DRX to be in an active period, or listening, based on the first DRX, to downlink control information for scheduling unicast data. In this way, the communication apparatus can continue to receive the downlink control information and/or the data.

In a possible design, the controlling, by the communication apparatus, the first DRX to be in an active period includes: starting, by the communication apparatus, the timer corresponding to the first DRX.

In a possible design, the timer corresponding to the first DRX includes any one or more of the following: a first timer, a second timer, a third timer, and a fourth timer. The first timer indicates duration after newly transmitted control information or newly transmitted data is scheduled. The second timer indicates duration in which the communication apparatus receives the retransmitted data. The third timer indicates waiting duration before the communication apparatus receives the retransmitted data. Timing duration of the fourth timer indicates duration in which the communication apparatus waits to receive the control information after being woken up.

In a possible design, the downlink control information for scheduling unicast data includes any one or more of the following: downlink control information transmitted in a unicast manner, downlink control information for scheduling data transmitted in the unicast manner, and downlink control information for scheduling unicast data transmitted in the unicast manner.

According to a ninth aspect, an embodiment of this application provides a computer-readable storage medium, including computer instructions. When the computer instructions are run on an electronic device, the electronic device is enabled to perform the DRX control method according to any one of the foregoing aspects and the possible implementations.

According to a tenth aspect, an embodiment of this application provides a computer program product. When the computer program product runs on an electronic device, the electronic device is enabled to perform the DRX control method according to any one of the foregoing aspects and the possible implementations.

According to an eleventh aspect, an embodiment of this application provides a system. The system may include the communication apparatus and the network device according to any possible implementation of any one of the foregoing aspects. The communication apparatus and the network device may perform the DRX control method according to any one of the foregoing aspects and the possible implementations.

According to a twelfth aspect, a communication apparatus is provided, including at least one processor and a memory. The at least one processor is connected to a transceiver, and the at least one processor is configured to read and execute a program stored in the memory, to enable the apparatus to perform the method according to the foregoing methods or any possible design of the methods.

### BRIEF DESCRIPTION OF DRAWINGS

FIG. 1 is a schematic diagram of a DRX cycle according to an embodiment of this application;
FIG. 2 is a diagram of random access signal interaction according to an embodiment of this application;
FIG. 3 is a diagram of random access signal interaction according to an embodiment of this application;
FIG. 4 is a schematic diagram of a network architecture according to an embodiment of this application;
FIG. 5 is a schematic flowchart of a DRX control method according to an embodiment of this application;
FIG. 6 is a schematic flowchart of a DRX control method according to an embodiment of this application;
FIG. 7 is a schematic diagram of misalignment between active periods of communication apparatuses according to an embodiment of this application;
FIG. 8 is a schematic flowchart of a DRX control method according to an embodiment of this application;
FIG. 9 is a schematic flowchart of a DRX control method according to an embodiment of this application;
FIG. 10 is a schematic flowchart of a DRX control method according to an embodiment of this application;
FIG. 11 is a schematic flowchart of a DRX control method according to an embodiment of this application;
FIG. 12 is a schematic diagram of a structure of a terminal device according to an embodiment of this application;
FIG. 13 is a schematic diagram of a structure of UE according to an embodiment of this application;
FIG. 14 is a schematic diagram of a structure of a network device according to an embodiment of this application; and
FIG. 15 is a schematic diagram of a structure of a base station according to an embodiment of this application.

### DESCRIPTION OF EMBODIMENTS

**For ease of understanding, example descriptions of some concepts related to embodiments of this application are provided for reference, as shown in the following.**

### 1. MBS

**MBS transmission manner:** For MBS service/data transmission, there may be any one or more of the following transmission manners: a dynamic transmission manner and/or a configured transmission manner.

The dynamic transmission manner includes a point-to-point (Point-to-Point, PTP) transmission manner and/or a point-to-multipoint (Point-to-Multipoint, PTM) transmission manner.

PTP transmission manner: In this transmission manner, a transmit end sends a piece of data to a receive end. The PTP transmission manner may be understood as follows: scheduling, (by a network device) by using a physical downlink control channel (Physical Downlink Control Channel, PDCCH)/downlink control information (Downlink control information, DCI) scrambled by using a UE-specific radio network temporary identifier (Radio Network Temporary Identifier, RNTI) (for example, a cell-radio network temporary identifier (Cell-RNTI, C-RNTI) or a first RNTI), a physical downlink shared channel (Physical downlink shared channel, PDSCH) scrambled by using the UE-specific RNTI (for example, the C-RNTI or the first RNTI) (for a terminal device). The PTP transmission manner may also be referred to as a C+C transmission manner.

In this application, the DCI may be replaced with the PDCCH, and the PDCCH may be replaced with the DCI.

In this application, the scrambling a PDCCH/DCI/control information by using an RNTI may be understood as: scrambling, by using the RNTI, cyclic redundancy check (cyclic redundancy check, CRC) of the PDCCH/DCI/control information; or that CRC of the PDCCH/DCI/control information is scrambled by using the RNTI (PDCCH/DCI/control information with CRC scrambled by RNTI).

PTM transmission manner: In the PTM transmission manner, a transmit end may send a piece of data to a plurality of receive ends.

The PTM transmission manner may include a first PTM transmission manner and/or a second PTM transmission manner.

The first PTM transmission manner may be understood as: scheduling, (by a network device) by using a PDCCH/DCI scrambled by using a common RNTI (for example, a Group-RNTI (G-RNTI) or a second RNTI), a PDSCH scrambled by using the common RNTI (for example, the G-RNTI or the second RNTI) (for a terminal device). Alternatively, it may be understood as that a network side scrambles a piece of DCI by using a common RNTI, and the DCI is for scheduling a piece of data scrambled by using the common RNTI. In this case, a plurality of communication apparatuses receive the same piece of DCI, and data received by the plurality of communication apparatuses is the same.

The first PTM transmission manner may also be referred to as a G+G transmission manner.

The second PTM transmission manner may be understood as: scheduling, (by a network device) by using a PDCCH/DCI scrambled by using a UE-specific RNTI (for example, a C-RNTI or a first RNTI), a PDSCH scrambled by using a common RNTI (for example, a G-RNTI or a second RNTI) (for a terminal device). Alternatively, it may be understood as that each of a plurality of communication apparatuses receives a piece of DCI scrambled by using a specific RNTI, but the pieces of DCI are for scheduling a same piece of data. In other words, although the pieces of DCI received by the communication apparatuses are different, data received by the plurality of communication apparatuses is the same.

The second PTM transmission manner may also be referred to as a C+G transmission manner.

For example, the PDSCH may also be understood as data.

The configured transmission manner may be understood as: transmitting data/multicast data (to a terminal device) on a configuration resource (by a network device); or receiving data/multicast data (sent by a network device) on a configuration resource (by a terminal device).

The configured transmission manner may also be referred to as a semi-persistent transmission manner.

The configuration resource may also be referred to as a semi-persistent scheduling (Semi-Persistent Scheduling, SPS) resource.

**MBS HARQ:** NR MBS supports hybrid automatic repeat request (Hybrid Automatic Repeat reQuest, HARQ).

### 2. Multicast and unicast

Multicast may include any one or more of the following: broadcast in an MBMS or MBS; multicast in the MBMS or MBS; multicast in the MBMS or MBS; multicast in vehicle to everything (Vehicle To Everything, V2X); multicast in V2X; broadcast in V2X; multicast; broadcast; multicast; groupcast; and broadcast.

A multicast service may include/be replace with any one or more of the following: a broadcast service, a multicast service, an MBS service, an MBS broadcast service, an MBS multicast service, a V2X multicast service, and a V2X broadcast service.

Data corresponding to the multicast service may be referred to as multicast data.

Unicast may include any one or more of the following: unicast in V2X; and unicast. Optionally, the unicast may be understood as unicast transmission.

**Indicating waiting duration before a communication apparatus receives retransmitted data may include/be understood as any one or more of the following: indicating waiting duration (for example, minimum duration) before the communication apparatus has received/receives the retransmitted data (for example, DL data or SL data), and indicating waiting duration (for example, minimum duration) before the communication apparatus expects to receive/receives the retransmitted data (for example, DL data or SL data).**

**Indicating duration in which the communication apparatus receives the retransmitted data may include/be understood as indicating duration (for example, maximum duration) in which the communication apparatus has received/receives the retransmitted data (for example, DL data or SL data).**

### 3. DRX

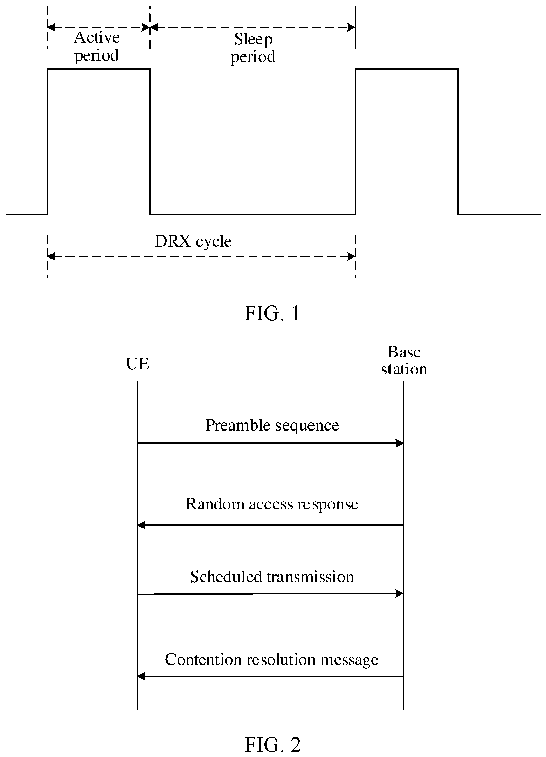

DRX is used to control a behavior of listening to a PDCCH by a terminal device, so that power consumption of the terminal device can be reduced while data can be effectively transmitted. When the DRX is configured for the terminal device, the terminal device may be enabled to enter a sleep period at some time. In this case, the terminal device is in a "sleep state", and the terminal device does not need to continuously listen to the PDCCH. When the terminal device needs to listen to the PDCCH, the terminal device wakes up from the "sleep state" to enter an "active state", that is, enters an active period. In this way, the terminal device can save power. A typical DRX cycle may be shown in FIG. 1. One DRX cycle (cycle) includes: onDuration (equivalent to the active period), duration (not shown in FIG. 1) controlled by a timer, and an Opportunity for DRX (the sleep period).

onDuration: Duration in which the terminal device waits to receive the PDCCH after the terminal device wakes up. If the terminal device successfully decodes the PDCCH, the terminal device remains in the wake-up state, and prolongs wake-up time by using a control timer (for example, an inactivity timer, a retransmission timer, or an RTT timer). Opportunity for DRX: This period of time is sleep time in DRX, that is, time in which the terminal device enters the sleep period to save power and does not listen to the PDCCH. Longer sleep time in DRX indicates lower power consumption of the terminal device.

DRX Cycle: The DRX cycle may be understood as a repetition cycle of onDuration. One DRX cycle consists of onDuration, a part of time in duration controlled by a possible subsequent timer, and the Opportunity for DRX.

### DRX in unicast:

In existing DRX, timers for controlling the terminal device to be in the active state may include (where explanations of the timers are described by using the following as examples): an OnDuration Timer, an InactivityTimer, and a RetransmissionTimer.

The RetransmissionTimer is configured for each downlink HARQ process, and may be understood as maximum duration in which the terminal device receives expected downlink retransmission data in a retransmission scenario, that is, maximum duration in which the terminal device needs to listen to the PDCCH.

AHARQ-RTT-Timer is also configured for each downlink HARQ process, and may be understood as minimum duration that the terminal device needs to wait before receiving the expected downlink retransmission data.

When DRX is configured for a terminal device, and in a case of static configuration (configured assignment), a specific processing procedure in which the terminal device performs DRX may be as follows:
(1) If the terminal device receives downlink data in a configured downlink assignment in the active period, the terminal device starts the HARQ-RTT-Timer after sending feedback to a network device. If the received downlink data is successfully decoded, the terminal device stops drx-HARQ-RTT-TimerDL timing.
(2) If the HARQ-RTT-Timer expires, and there is data that is not successfully decoded in the HARQ process, the terminal device starts a RetransmissionTimerDL after the HARQ-RTT-Timer expires, to receive the retransmitted data.

When DRX is configured for a terminal device, and in a case of dynamic scheduling, a specific processing procedure in which the terminal device performs DRX may be as follows:
(1) The terminal device listens to the PDCCH in the active period. If the PDCCH indicates that there is downlink transmission, the terminal device may start the HARQ-RTT-Timer after sending the feedback to the network device. If the received downlink data is successfully decoded, the terminal device stops the drx-HARQ-RTT-TimerDL timing.
(2) The terminal device listens to the PDCCH in the active period. If the PDCCH indicates that there is new transmission (new uplink transmission or new downlink transmission), the terminal device starts or restarts the InactivityTimer after receiving the PDCCH, to receive new data within the InactivityTimer.

### DRX in an LTE MBMS:

In LTE, SC-PTM DRX and unicast DRX are independent, and SC-PTM DRX is separately configured for each multicast. In this case, the active period of the terminal device includes On duration and duration of an InactivityTimer. When the terminal device accesses a PDCCH corresponding to a specific G-RNTI, the terminal device starts the Inactivity Timer. Because LTE SC-PTM does not involve retransmission, SC-PTM in the LTE MBMS does not involve a HARQ-RTT-Timer and a RetransmissionTimer.

### 4. V2X

V2X is a key technology of intelligent transportation system, and is considered as one of fields with the most industrial potential and the clearest market demand in the IoT system. Internet of Vehicles means that vehicle information is provided by using sensors mounted on vehicles, in-vehicle terminal devices, and the like, to implement a communication network of vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P) communication.

Generally, in a V2X scenario, a communication link for direct communication between a terminal and another terminal may be referred to as a sidelink (sidelink, SL) or a side link.

Unicast, multicast, and broadcast are supported in NR V2X.

### 5. Bandwidth part (Bandwidth Part, BWP)

The BWP may also be referred to as a bandwidth part.

A subset of a total cell bandwidth of a cell is referred to as the BWP. In NR R15, a network device may configure a plurality of BWPs for a terminal device, but the terminal device can work on only one BWP, namely, an active BWP or an initial BWP (initial BWP).

It should be noted that the BWP is used for description in this specification, but a name thereof is not necessarily BWP, and may be another name. For example, the BWP may be understood as a subset of the cell bandwidth. For example, the BWP may be understood as a part of the cell bandwidth. Alternatively, the cell bandwidth includes the BWP. For example, the BWP may alternatively be equivalent to the cell bandwidth.

### 6. Random access (Random Access, RA)

An example in which the terminal device is UE and the network device is a base station is used to describe a contention-based random access (Contention Based Random Access, CBRA) procedure and a contention-free random access (Contention Free Random Access) procedure.

The CBRA procedure is shown in FIG. 2, and includes the following steps:
(1) The UE sends a preamble sequence (preamble) (namely, a MSG (message) 1) to the base station;
(2) after receiving the preamble, the base station sends a random access response (RA response), namely, a MSG 2, to the UE;
(3) the UE sends a MSG 3 (scheduled transmission) to the base station; and
(4) after the base station successfully receives the MSG 3, the base station sends a contention resolution (Contention resolution) message, namely, a MSG 4, to the UE.

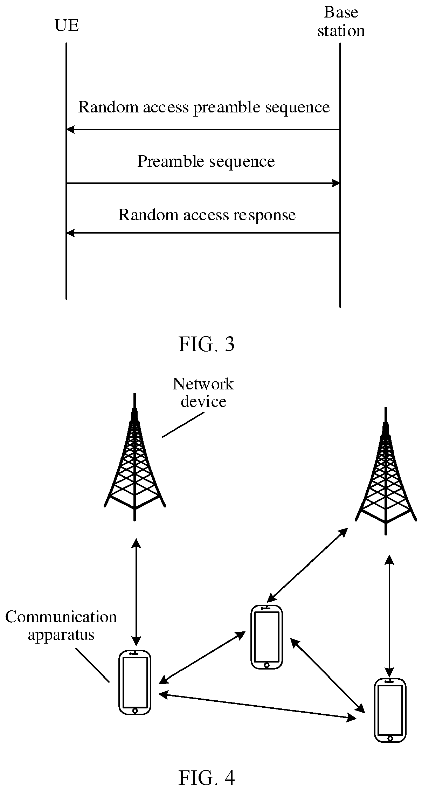

The CFRA procedure is shown in FIG. 3, and includes the following steps:
(1) The base station allocates a random access preamble sequence (RA preamble assignment) to the UE;
(2) the UE sends the preamble to the base station, and the preamble (a MSG 1) sent by the UE to the base station is dedicated; and
(3) after receiving the preamble, the base station sends a random access response (RA response), namely, a MSG 2, to the UE.

The following describes the technical solutions in embodiments of this application with reference to the accompanying drawings in embodiments of this application. In descriptions in embodiments of this application, "/" means "or" unless otherwise specified. For example, A/B may represent A or B. In the specification, "and/or" describes only an association relationship for describing associated objects and may represent that three relationships may exist. For example, A and/or B may represent the following three cases: Only A exists, both A and B exist, and only B exists. In addition, in descriptions in embodiments of this application, the term "a plurality of" means two or more than two.

In the following, the terms "first" and "second" are only used for description, and cannot be understood as indicating or implying relative importance or implicitly indicating a quantity of indicated technical features. Therefore, features defined with "first" and "second" may explicitly or implicitly include one or more of the features. In the descriptions of the embodiments, unless otherwise specified, "a plurality" means two or more.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

The technical solutions in embodiments of this application may be used in various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, and a future mobile communication system.

The method provided in embodiments of this application is applicable to but is not limited to the following fields: MBMS, SC-PTM, multicast broadcast service, MBSFN, dual-channel intelligent unicast (Dual-channel intelligent unicast, DC-IU), Broadcast, Multicast, multicast broadcast (Multicast Broadcast), Groupcast, V2X, public safety (public safety), mission critical (mission critical), transparent IPv4/IPv6 multicast delivery (transparent IPv4/IPv6 multicast delivery), IPTV, software delivery over wireless (software delivery over wireless), group communication (group communication), Internet of Things (Internet of things, IoT), television video (TV Video), television (TV), linear television (linear TV), live (Live), radio service (radio service), device to device (device to device, D2D), unmanned driving (unmanned driving), automated driving (automated driving, ADS), driver assistance (driver assistance, ADAS), intelligent driving (intelligent driving), connected driving (connected driving), intelligent network driving (intelligent network driving), car sharing (car sharing), and the like. As shown in FIG. 4, the method provided in this embodiment of this application may be applied to communication between communication apparatuses, or may be applied to communication between a communication apparatus and a network device.

The network device in this embodiment of this application may be a device with a wireless transceiver function or a chip that may be disposed in the device, and may be deployed in a radio access network to provide a wireless communication service for a terminal device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), or an access point (access point, AP), a wireless relay node, a wireless backhaul node, a transmission point (transmission reception point, TRP or transmission point, TP), or the like in a wireless fidelity (wireless fidelity, Wi-Fi) system. Alternatively, the network device may be a gNB or a transmission point (TRP or TP) in a 5G system, such as an NR system, or one antenna panel or a group of antenna panels (including a plurality of antenna panels) of a base station in the 5G system, or may be a network node, for example, a baseband unit (BBU), or a distributed unit (DU, distributed unit), that constitutes a gNB or a transmission point. Alternatively, the network device is a vehicle-mounted device, a wearable device, or a future evolved network device in a public land mobile network (Public Land Mobile Network, PLMN).

The communication apparatus in this embodiment of this application may be a terminal device or a communications chip. For example, the terminal is an entity that is on a user side and that is configured to receive a signal, send a signal, or receive a signal and send a signal. The terminal device is configured to provide one or more of a voice service and a data connectivity service for the user. The terminal device may alternatively be referred to as UE, an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a V2X device, for example, a smart vehicle (smart car or intelligent car), a digital vehicle (digital car), an unmanned vehicle (unmanned car, driverless car, pilotless car, or automobile), a self-driving vehicle (self-driving car or autonomous car), a pure electric vehicle (pure EV or battery EV), a hybrid electric vehicle (hybrid electric vehicle, HEV), a range-extended electric vehicle (range extended EV, REEV), a plug-in hybrid electric vehicle (plug-in HEV, PHEV), a new energy vehicle (new energy vehicle), or a road site unit (road site unit, RSU). Alternatively, the terminal device may be a device, for example, an electricity meter or a water meter, in device to device (device to device, D2D) communication. The terminal device may alternatively be a mobile station (mobile station, MS), a subscriber unit (subscriber unit), an unmanned aerial vehicle, an Internet of Things (internet of things, IoT) device, a station (station, ST) in WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, or a wearable device (which may also be referred to as a wearable intelligent device). The terminal device may alternatively be a terminal in a next generation communication system, for example, a terminal in a 5G system, a terminal in a future evolved PLMN, or a terminal in an NR system. For example, the terminal device in embodiments of this application may alternatively be a mobile phone (mobile phone), a tablet (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. Application scenarios are not limited in this embodiment of this application. In this application, methods and steps implemented by the terminal device may alternatively be implemented by a component (for example, a chip or a circuit) or the like that may be used in the terminal device. The foregoing terminal device and the component (for example, a chip or a circuit) that may be disposed in the terminal device are collectively referred to as the terminal device in this application.

It should be noted that, in this application, a communication apparatus and a network device are used as examples for description, but this is not limited to being applicable only to the communication apparatus and the network device. The solution in this application may be applicable to another device. This is not limited in this application. The communication apparatus is replaced with a first device, and the network device is replaced with a second device. For example, the solution in this application may also be applicable to a communication apparatus and another communication apparatus, and a network device and another network device.

### Problem introduction:

For a multicast service/multicast data, a network device may perform transmission in different transmission manners (for example, a C+C transmission manner, a C+G transmission manner, a G+G transmission manner, and a configured transmission manner), and the transmission manner may be varied.

For example, the network device transmits multicast data 1 in the C+G transmission manner, and transmits multicast data 2 in the G+G transmission manner or the C+C transmission manner.

### Problem 1:

A communication apparatus receives DCI 1/data 1 transmitted in the C+G transmission manner. Subsequently, the network device may transmit DCI 2/data 2 in the G+G transmission manner or the C+C transmission manner. Currently, there is no effective solution to how to ensure that the communication apparatus can receive the data subsequently transmitted by the network device in the G+G transmission manner or the C+C transmission manner.

For another example, the network device transmits multicast data 1 in the C+G transmission manner, and the network device may retransmit the multicast data 1 in the G+G transmission manner, the C+G transmission manner, or the C+C transmission manner.

### Problem 2:

A communication apparatus receives DCI 1/data 1 transmitted in the C+G transmission manner. Subsequently, the network device may retransmit the data 1 in the G+G transmission manner, the C+G transmission manner, or the C+C transmission manner. Currently, there is no effective solution to how to ensure that the communication apparatus can receive the retransmitted data 1 subsequently transmitted by the network device in the G+G transmission manner, the C+G transmission manner, or the C+C transmission manner.

For example, the network device transmits multicast data 1 in the configured transmission manner, and transmits multicast data 2 in the G+G transmission manner, the C+G transmission manner, or the C+C transmission manner.

### Problem 3:

A communication apparatus receives data 1 transmitted in the configured transmission manner. Subsequently, the network device may transmit DCI 2/data 2 in the C+C transmission manner, the C+G transmission manner, or the G+G transmission manner. Currently, there is no effective solution to how to ensure that the communication apparatus can receive the data subsequently transmitted by the network device in the G+G transmission manner, the C+G transmission manner, or the C+C transmission manner.

For another example, the network device transmits multicast data 1 in the configured transmission manner, and the network device may retransmit the multicast data 1 in the G+G transmission manner, the configuration transmission manner, or the C+C transmission manner.

### Problem 4:

A communication apparatus receives data 1 transmitted in the configured transmission manner. Subsequently, the network device may retransmit the data 1 in the G+G transmission manner, the C+G transmission manner, or the C+C transmission manner. Currently, there is no effective solution to how to ensure that the communication apparatus can receive the retransmitted data 1 subsequently transmitted by the network device in the G+G transmission manner, the C+G transmission manner, or the C+C transmission manner.

On the basis of resolving any plurality of the problems 1 to 4, there may be still some problems. This may cause high power consumption of the communication apparatus, or may be unfavorable to energy saving of the communication apparatus. For example:
**Problem 5:** A communication apparatus receives DCI 1/data 1 transmitted in the C+G transmission manner (for example, corresponding to a HARQ process 1). To ensure that the communication apparatus can receive the retransmitted data 1 subsequently transmitted by the network device in the G+G transmission manner, the C+G transmission manner, or the C+C transmission manner, the communication apparatus may start or restart a timer (for example, a second timer or a Retransmission Timer, associated with the HARQ process 1) that is used for retransmission and that is corresponding to DRX associated with multicast, and/or a timer (for example, a fifth timer or a Retransmission Timer, associated with a HARQ process 1) that is used for retransmission and that is corresponding to DRX associated with unicast, to listen to a PDCCH for retransmission of the data 1. If the communication apparatus receives DCI and/or data (for example, retransmission of the data 1 or other data) that is transmitted in the G+G transmission manner, the C+G transmission manner, the C+C transmission manner, or the configured transmission manner and that is associated with a same HARQ process (for example, the HARQ process 1), the communication apparatus still listens to the PDCCH (for example, the PDCCH for retransmission of the data 1). This increases power consumption of the communication apparatus.

### Problem 6:

A communication apparatus receives data 1 transmitted in the configured transmission manner (for example, corresponding to a HARQ process 1). To ensure that the communication apparatus can receive the retransmitted data 1 subsequently transmitted by the network device in the G+G transmission manner, the C+G transmission manner, or the C+C transmission manner, the communication apparatus may start or restart a timer (for example, a second timer or a Retransmission Timer, associated with the HARQ process 1) that is used for retransmission and that is corresponding to DRX associated with multicast, and/or a timer (for example, a fifth timer or a Retransmission Timer, associated with a HARQ process 1) that is used for retransmission and that is corresponding to DRX associated with unicast, to listen to a PDCCH for retransmission of the data 1. If the communication apparatus receives DCI and/or data (for example, the retransmitted data 1 or other data) that is transmitted in the G+G transmission manner, the C+G transmission manner, the C+C transmission manner, or the configured transmission manner and that is associated with a same HARQ process (for example, the HARQ process 1), the communication apparatus still listens to the PDCCH (for example, the PDCCH for retransmission of the data 1). This increases power consumption of the communication apparatus.

### Embodiment 1.1

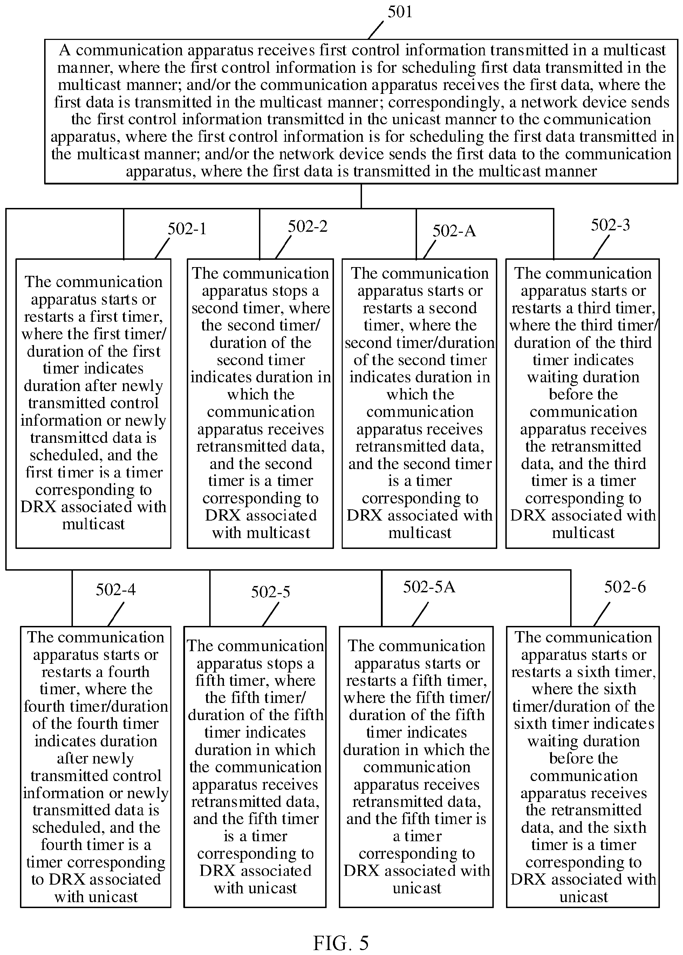

In view of the technical problems in the foregoing problem 1, problem 2, problem 3, problem 4, problem 5, and problem 6, to ensure that the communication apparatus can receive the multicast data (in other words, to avoid that the communication apparatus cannot receive the multicast data), and/or to save energy of the communication apparatus, this application provides a DRX control method. As shown in FIG. 5, the method includes the following steps.

**501: A communication apparatus receives first control information transmitted in a unicast manner, where the first control information is for scheduling first data transmitted in a multicast manner; and/or the communication apparatus receives the first data, where the first data is transmitted in the multicast manner. Correspondingly, a network device sends the first control information transmitted in the unicast manner to the communication apparatus, where the first control information is for scheduling the first data transmitted in the multicast manner; and/or the network device sends the first data to the communication apparatus, where the first data is transmitted in the multicast manner.**

It should be noted that the multicast in Embodiments 1.1 and 1.2 in this application may be understood as multicast corresponding to the first data, or multicast corresponding to a G-RNTI corresponding to the first data.

**The first control information transmitted in the unicast manner may include/be understood as any one or more of the following:**
(1) The first control information is transmitted on a first resource, where the first resource is a resource associated with unicast.

That the first resource is a resource associated with unicast may be understood as follows: The first resource is in a BWP corresponding to unicast.

For example, the first resource may be a PDCCH resource.

(2) The first control information is scrambled by using a first RNTI.

The first RNTI may be used for any one or more of the following: unicast, scheduling a dynamic resource, a retransmission resource of a dynamic resource, activating a configuration resource, reactivating a configuration resource, deactivating a configuration resource, scheduling a retransmission resource of a configuration resource, and scrambling (for example, scrambling a PDCCH or a PDSCH).

For example, the first RNTI may be a C-RNTI or a CS-RNTI.

For example, the first control information may be understood as DCI.

In this application, the DCI may be replaced with the PDCCH. The PDCCH may be replaced with the DCI.

For example, the first control information transmitted in the unicast manner may be a PDCCH/DCI scrambled by using a C-RNTI, or DCI transmitted on a PDCCH scrambled by using a C-RNTI.

It may be understood that "a communication apparatus receives first control information transmitted in a unicast manner" indicates that the first control information is specific to the communication apparatus. In other words, the first control information is specifically sent to the communication apparatus.

It should be noted that the first control information may be alternatively replaced with second information, first DCI, or the like. This is not limited in this application, and the first control information is not limited to be DCI in this application.

**The first data transmitted in the multicast manner or that the first data is transmitted in the multicast manner may include/be understood as any one or more of the following:**
(1) The first data is transmitted on a second resource, where the second resource is a resource associated with multicast.

That the second resource is a resource associated with multicast may be understood as follows: The second resource is in a common frequency resource corresponding to multicast, or the second resource is an SPS resource corresponding to multicast.

The SPS resource corresponding to multicast may be understood as a common SPS resource (for example, a PDSCH resource) corresponding to multicast. It may be understood that all communication apparatuses that receive multicast may receive data on an SPS resource corresponding to the multicast.

For example, the communication apparatus may obtain configuration of the SPS resource or a correspondence between the SPS resource/the configuration of the SPS resource and the multicast by using any one or more of a broadcast message (for example, system information and a multicast control channel (Multicast Control Channel, MCCH) message), a radio resource control (Radio Resource Control, RRC) message (for example, a dedicated RRC message), a media access control (Medium Access Control, MAC) message (for example, a MAC control element (Control Element, CE)), a physical layer message (for example, DCI), or preconfiguration.

For example, after obtaining the SPS configuration, the communication apparatus may need to be activated (for example, activated by using a physical layer message/DCI) to receive data by using the resource, or may directly receive data by using the resource (that is, activation is not needed).

The common frequency resource corresponding to multicast may be understood as a BWP corresponding to multicast, or a frequency range corresponding to multicast.

For example, the second resource may be a PDSCH resource.

(2) The first data is scrambled by using a second RNTI.

The second RNTI may be used for any one or more of the following: multicast, scheduling a dynamic resource, a retransmission resource of a dynamic resource, activating a configuration resource, reactivating a configuration resource, deactivating a configuration resource, scheduling a retransmission resource of a configuration resource, and scrambling (for example, scrambling a PDCCH or a PDSCH).

For example, the second RNTI may be a G-RNTI.

For example, the first data may be multicast data.

For example, the first data transmitted in the unicast manner may be a PDSCH scrambled by using a G-RNTI, or data transmitted on a PDSCH scrambled by using a G-RNTI, or data scrambled by using a G-RNTI.

It may be understood that "transmitting the first data in the multicast manner" indicates that the first data may not be specific to the communication apparatus only. In other words, the first data may not be specifically sent to the communication apparatus only. For example, a plurality of communication apparatuses may all receive the first data transmitted in the multicast manner, and the plurality of communication apparatuses may be UEs that are interested in the first data.

**That "the first control information is for scheduling the first data transmitted in the multicast manner" may include/be understood as any one or more of the following:**
(1) The first control information indicates that the first data is transmitted in the multicast manner.

That the first control information indicates that the first data is transmitted in the multicast manner includes any one or more of the following: A format of the first control information/scrambling information of the first control information/indication information (for example, one or more fields) in the first control information indicates that the first data is transmitted in the multicast manner.

The communication apparatus receives the first control information, and determines, based on the format of the first control information/the scrambling information of the first control information/the indication information (for example, one or more fields) in the first control information, that the first data is transmitted in the multicast manner.

(2) The first control information indicates that the first data is scrambled by using the second RNTI.

That the first control information indicates that the first data is scrambled by using the second RNTI includes any one or more of the following: A format of the first control information/indication information (for example, one or more fields) in the first control information indicates that the first data is scrambled by using the second RNTI.

For example, the first control information indicates that the first data is scrambled by using a G-RNTI 1.

(3) The first control information indicates that the first data is data corresponding to multicast (service) 1.

That the first control information indicates that the first data is data corresponding to the multicast (service) 1 includes any one or more of the following: A format of the first control information/indication information (for example, one or more fields) in the first control information indicates that the first data is data corresponding to the multicast (service) 1.

It may be understood that the communication apparatus obtains a correspondence between the multicast (service) 1 and the G-RNTI 1, and knows to receive the first data by using the G-RNTI 1.

(4) The first control information is for scheduling the first data.

The first control information indicates a resource location of the first data and/or information needed for decoding the first data, for example, a time domain resource and/or a frequency domain resource, a modulation and coding scheme (Modulation and Coding Scheme, MCS), a HARQ process ID, and a new data indicator (New Data Indicator, NDI).

(5) The first control information indicates downlink transmission.

The downlink transmission may be understood as the first data.

It may be understood that a plurality of communication apparatuses may receive different PDCCHs/DCI (for example, a PDCCH/DCI received by each communication apparatus is scrambled by using a C-RNTI corresponding to each communication apparatus), and the different PDCCHs/DCI schedule a same PDSCH/same data.

For example, the communication apparatus receives the DCI/PDCCH scrambled by using the C-RNTI, and the DCI/PDCCH schedules a PDSCH/data scrambled by using the G-RNTI.

For example, the communication apparatus receives the PDSCH/data scrambled by using the G-RNTI.

It may be understood that the communication apparatus receives the first control information transmitted in the unicast manner, and the first control information sent by the network device to the plurality of communication apparatuses is different. The first control information received by each of the plurality of communication apparatuses is different.

It may be understood that the communication apparatus receives the first data transmitted in the multicast manner, and the first data sent by the network device to the plurality of communication apparatuses is the same. The first data received by each of the plurality of communication apparatuses is the same.

In this application, the multicast manner may alternatively include/be replaced with the multicast manner or a broadcast manner. In this application, the multicast manner is used as an example for description.

For example, the first control information and/or the first data are/is associated with the first HARQ process.

**502: The communication apparatus performs any one or more of the following steps 502-1, 502-2, 502-2A, and 502-3; and/or the communication apparatus performs any one or more of the following steps 502-4, 502-5, 502-5A, and 502-6.**

Optionally, before the communication apparatus performs any one or more of steps 502-1, 502-2, 502-2A, and 502-3, the method further includes: The communication apparatus receives first indication information.

The first indication information indicates any one or more of the following: The network device retransmits the first data or transmits subsequent data in the C+G transmission manner or the G+G transmission manner; the network device does not retransmit the first data or transmit subsequent data in the C+C transmission manner; and the network device configures/indicates that the communication apparatus may start/stop/restart a timer corresponding to DRX associated with multicast.

Optionally, before the communication apparatus performs any one or more of steps 502-4, 502-5, 502-5A, and 502-6, the method further includes: The communication apparatus receives second indication information.

The second indication information indicates any one or more of the following: The network device retransmits the first data or transmits subsequent data in the C+G transmission manner or the G+G transmission manner; the network device retransmits the first data or transmits subsequent data in the C+C transmission manner; and the network device configures/indicates that the communication apparatus may start/stop/restart a timer corresponding to DRX associated with unicast.

For example, the first data corresponds to the multicast (service) 1. For example, the first data is scrambled by using the G-RNTI 1. The subsequent data may be understood as data corresponding to the multicast (service) 1, or may be understood as data corresponding to a service (which may include one or more services) corresponding to the G-RNTI 1.

For example, the first indication information or the second indication information may be included in the first control information, or may be included in any one or more of a broadcast message (for example, system information or an MCCH message), an RRC message (for example, a dedicated RRC message), a MAC message (for example, a MAC CE), a physical layer message (for example, DCI), or preconfiguration.

**502-1: The communication apparatus starts or restarts a first timer, where the first timer/duration of the first timer indicates duration after newly transmitted control information or newly transmitted data is scheduled, and the first timer is a timer corresponding to DRX associated with multicast.**

The indicating duration after newly transmitted control information or newly transmitted data is scheduled may include/be understood as: indicating duration after a newly transmitted PDCCH occasion is scheduled, or indicating duration after newly transmitted SCI is scheduled.

It should be noted that in this application (or a definition/function of the first timer/the duration of the first timer), whether the first timer is started immediately after being used to schedule newly transmitted control information or newly transmitted data or is started after a period of time is not limited.

For example, the first timer may be understood as an Inactivity Timer, or an Inactivity Timer corresponding to DRX associated with multicast.

For example, the DRX associated with multicast may be understood as any one or more of the following: DRX corresponding to the second RNTI, DRX corresponding to a service corresponding to the second RNTI, and DRX corresponding to a service corresponding to the first data.

It should be noted that the service corresponding to the first data or the service corresponding to the second RNTI may include one or more services.

Optionally, the starting or restarting the first timer includes: starting or restarting the first timer when the first data is newly transmitted data, or the first control information indicates new transmission/that the first data is newly transmitted, or the communication apparatus determines that the first data is newly transmitted data.

For example, the communication apparatus determines, based on the NDI in the first control information, that the first data is newly transmitted data.

For example, when determining that the first data is newly transmitted data, the communication apparatus starts the Inactivity Timer corresponding to DRX associated with multicast.

Optionally, the communication apparatus may start or restart the first timer after first duration/at a first moment after receiving the first control information, or start or restart the first timer after first duration/at a first moment after receiving the first data.

The first moment may be an a^{th} symbol/slot/subframe/frame or the like. a is an integer greater than or equal to 0. A value of the first moment/a value of a/a value of the first duration may be configured or preconfigured by the network device, or specified in a protocol. This is not limited in this application.

For example, the communication apparatus receives DCI and/or data (corresponding to the first HARQ process) transmitted in the C+G transmission manner, or receives data (corresponding to the first HARQ process) transmitted in the configured transmission manner, and the network device may subsequently transmit other DCI and/or data in the G+G transmission manner (or the C+G transmission manner), or may retransmit the data in the G+G transmission manner (or the C+G transmission manner). To ensure that the communication apparatus can receive DCI and/or data subsequently transmitted by the network device in the G+G transmission manner (or the C+G transmission manner), the communication apparatus may start the first timer (corresponding to a second HARQ process) corresponding to DRX associated with multicast. In this way, if the network device transmits other DCI and/or data or retransmits the data in the G+G transmission manner (or the C+G transmission manner) within running duration of the first timer, it can be ensured that the communication apparatus can receive the DCI and/or data, or in other words, it can be avoided that the communication apparatus is in a sleep state and cannot receive the DCI and/or data, so that reliability of data transmission is improved.

**In a possible implementation, 502-2: The communication apparatus stops a second timer, where the second timer/duration of the second timer indicates duration in which the communication apparatus receives retransmitted data, and the second timer is a timer corresponding to DRX associated with multicast.**

Indicating duration in which the communication apparatus receives retransmitted data may include/be understood as indicating maximum duration in which the communication apparatus receives retransmitted downlink data.

For example, the second timer may be understood as a Retransmission Timer, or a Retransmission Timer corresponding to DRX associated with multicast.

Optionally, the stopping the second timer includes: stopping the second timer when the first data is newly transmitted data or retransmitted data, or the first control information indicates new transmission or retransmission/that the first data is newly transmitted or retransmitted, or the communication apparatus determines that the first data is newly transmitted data or retransmitted data.

For example, the second timer corresponding to DRX associated with multicast (for example, corresponding to a first HARQ process) may be running (for example, the second timer, corresponding to the second HARQ process, corresponding to DRX associated with multicast may be started or restarted by the communication apparatus to ensure that the communication apparatus can receive retransmitted data that is subsequently transmitted by the network device in the G+G transmission manner (or the C+G transmission manner) because the communication apparatus previously receives DCI and/or data X (corresponding to the first HARQ process) transmitted in the C+G transmission manner or the G+G transmission manner, or receives data X (corresponding to the first HARQ process) transmitted in the configured transmission manner), and the communication apparatus receives DCI and/or data Y (for example, newly transmitted data or retransmitted data, corresponding to the second HARQ process) transmitted in the C+G transmission manner, or receives data Y (for example, newly transmitted data or retransmitted data, corresponding to the second HARQ process) transmitted in the configured transmission manner. To save energy of the communication apparatus, the second timer corresponding to DRX associated with multicast may be stopped. It may be understood that, if the data Y is retransmitted data of the data X, it indicates that retransmission of the data X is received, and the second timer corresponding to DRX associated with multicast may be stopped. If the data Y is newly transmitted data, it indicates that the network device no longer retransmits the data X for the communication apparatus, and the second timer corresponding to DRX associated with multicast may be stopped.

For example, the second timer is associated with the second HARQ process.

It may be understood that the first data/first control information and the second timer correspond to a same HARQ process.

In another possible implementation, step 502-2 may be replaced with 502-2A.

**For example,** if the DRX associated with multicast does not include a HARQ-RTT-Timer, step **502-2 may be replaced with 502-2A.**

**502-2A: The communication apparatus starts or restarts a second timer, where the second timer/duration of the second timer indicates duration in which the communication apparatus receives retransmitted data, and the second timer is a timer corresponding to DRX associated with multicast.**

Optionally, the starting or restarting a second timer includes: The communication apparatus sends first feedback information, where the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and starts or restarts the second timer.

The first feedback information may include an ACK and/or a NACK.

For example, that the first feedback resource is associated with the first data may include/be understood as that the first feedback resource is used by the communication apparatus to send the first feedback information.

For example, the first feedback resource may be the 1^{st} feedback resource in time domain or the last feedback resource in time domain that is associated with the first data. This is not limited in this application. For example, a plurality of communication apparatuses receive the first data, and feedback resources corresponding to the plurality of communication apparatuses may be the same in time domain (for example, may be time division). The first feedback resource may be the 1^{st} feedback resource in time domain or the last feedback resource in time domain in the plurality of feedback resources. In this way, active time (active time of DRX associated with multicast) of different communication apparatuses can be aligned, to ensure that the communication apparatus can receive the control information and/or data sent by the network device.

For example, the communication apparatus may send the first feedback information on a PUCCH resource or a PUSCH resource.

For example, the first feedback resource may include the PUCCH resource.

Optionally, the following condition needs to be met for starting or restarting the second timer: The communication apparatus fails to receive/decode the first data.

Optionally, the communication apparatus may start the second timer after second duration/at a second moment after the first control information is received, or start the second timer after the second duration/at the second moment after the first data is received, or start the second timer after the second duration/at the second moment after the first feedback information is sent, or start the second timer after the second duration/at the second moment after the first feedback time.

The second moment may be a b^{th} symbol/slot/subframe/frame or the like. b is an integer greater than or equal to 0. A value of the second moment/a value of b/a value of the second duration may be configured or preconfigured by the network device, or specified in a protocol. This is not limited in this application.

For example, the communication apparatus receives DCI and/or data (corresponding to the first HARQ process) transmitted in the C+G transmission manner, or receives data transmitted in the configured transmission manner, and the network device may subsequently transmit other DCI and/or data in the G+G transmission manner (or the C+G transmission manner), or may retransmit the data in the G+G transmission manner (or the C+G transmission manner). To ensure that the communication apparatus can receive DCI and/or data subsequently transmitted by the network device in the G+G transmission manner (or the C+G transmission manner), the communication apparatus may start or restart the second timer (corresponding to the second HARQ process) corresponding to DRX associated with multicast. In this way, if the network device transmits other DCI and/or data or retransmits the data in the G+G transmission manner (or the C+G transmission manner) within running duration of the second timer, it can be ensured that the communication apparatus can receive the DCI and/or data, or in other words, it can be avoided that the communication apparatus is in a sleep state and cannot receive the DCI and/or data, so that reliability of data transmission is improved.

**502-3: The communication apparatus starts or restarts a third timer, where the third timer/duration of the third timer indicates waiting duration before the communication apparatus receives the retransmitted data, and the third timer is a timer corresponding to DRX associated with multicast.**

For example, the third timer may be understood as a HARQ-RTT-Timer, or a HARQ-RTT-Timer corresponding to DRX associated with multicast.

Optionally, the starting or restarting a third timer includes: The communication apparatus sends first feedback information, where the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and starts or restarts the third timer.

The first feedback information may include an ACK and/or a NACK.

For example, that the first feedback resource is associated with the first data may include/be understood as that the first feedback resource is used by the communication apparatus to send the first feedback information.

For example, the first feedback resource may be the 1^{st} feedback resource in time domain or the last feedback resource in time domain that is associated with the first data. This is not limited in this application. For example, a plurality of communication apparatuses receive the first data, and feedback resources corresponding to the plurality of communication apparatuses may be the same in time domain (for example, may be time division). The first feedback resource may be the 1^{st} feedback resource in time domain or the last feedback resource in time domain in the plurality of feedback resources. In this way, active time (active time of DRX associated with multicast) of different communication apparatuses can be aligned, to ensure that the communication apparatus can receive the control information and/or data sent by the network device.

For example, the communication apparatus may send the first feedback information on a PUCCH resource or a PUSCH resource.

For example, the first feedback resource may include the PUCCH resource.

Optionally, the following condition needs to be met for starting or restarting the third timer: The communication apparatus fails to receive/decode the first data.

Optionally, the communication apparatus may start the third timer after third duration/at a third moment after the first control information is received, or start the third timer after the third duration/at the third moment after the first data is received, or start the third timer after the third duration/at the third moment after the first feedback information is sent, or start the third timer after the third duration/at the third moment after the first feedback time.

The third moment may be a c^{th} symbol/slot/subframe/frame or the like. c is an integer greater than or equal to 0. A value of the third moment/a value of c/a value of the third duration may be configured or preconfigured by the network device, or specified in a protocol. This is not limited in this application.

Optionally, this application further includes: When the third timer expires, the communication apparatus starts or restarts the second timer; or when the third timer expires and the communication apparatus fails to receive/decode the first data, the communication apparatus starts or restarts the second timer.

Optionally, the communication apparatus may start the second timer after the second duration/at the second moment after the third timer expires.

For example, the communication apparatus receives DCI and/or data transmitted in the C+G transmission manner, or receives data transmitted in the configured transmission manner, and the network device may subsequently transmit other DCI and/or data in the G+G transmission manner (or the C+G transmission manner), or may retransmit the data in the G+G transmission manner (or the C+G transmission manner). To ensure that the communication apparatus can receive the DCI and/or data subsequently transmitted by the network device in the G+G transmission manner (or the C+G transmission manner), the communication apparatus may start or restart the third timer corresponding to DRX associated with multicast. Optionally, after the third timer expires, the communication apparatus starts or restarts the second timer corresponding to DRX associated with multicast. In this way, if the network device transmits other DCI and/or data or retransmits the data in the G+G transmission manner (or the C+G transmission manner) within running duration of the second timer (and/or running duration of the third timer), it can be ensured that the communication apparatus can receive the DCI and/or data, or in other words, it can be avoided that the communication apparatus is in a sleep state and cannot receive the DCI and/or data, so that reliability of data transmission is improved. In addition, the communication apparatus starts or restarts the third timer corresponding to DRX associated with multicast, and after the third timer expires, starts or restarts the second timer corresponding to DRX associated with multicast. This can also avoid listening to retransmission of the data within running duration of the third timer, and facilitate energy saving of the communication apparatus.

For example, the third timer is associated with the second HARQ process.

It may be understood that the first data/first control information and the third timer correspond to a same HARQ process.

The first timer, the second timer, and the third timer all correspond to the second HARQ process. The first HARQ process and the second HARQ process may be understood as a same HARQ process or two associated HARQ processes.

**502-4: The communication apparatus starts or restarts a fourth timer. The fourth timer/duration of the fourth timer indicates duration after newly transmitted control information or newly transmitted data is scheduled. The fourth timer is a timer corresponding to DRX associated with unicast.**

It should be noted that in this application (or a definition/function of the fourth timer/the duration of the fourth timer), whether the fourth timer is started immediately after being used to schedule newly transmitted control information or newly transmitted data or is started after a period of time is not limited.

For example, the fourth timer may be understood as an Inactivity Timer, or an Inactivity Timer corresponding to DRX associated with unicast.

For example, the DRX associated with unicast may be understood as any one or more of the following: DRX corresponding to the first RNTI.

For related content of "starting or restarting the fourth timer", refer to related content of "starting or restarting the first timer" in step 502-1. The first timer is replaced with the fourth timer for understanding, and details are not described herein again.

For example, the communication apparatus receives DCI and/or data transmitted in the C+G transmission manner, or receives data transmitted in the configured transmission manner, and the network device may subsequently transmit other DCI and/or data in the C+C transmission manner (or the C+G transmission manner), or may retransmit the data in the C+C transmission manner (or the C+G transmission manner). To ensure that the communication apparatus can receive the DCI and/or data subsequently transmitted by the network device in the C+C transmission manner (or the C+G transmission manner), the communication apparatus may start the fourth timer corresponding to DRX associated with unicast. In this way, if the network device transmits other DCI and/or data or retransmits the data in the C+C transmission manner (or the C+G transmission manner) within running duration of the fourth timer, it can be ensured that the communication apparatus can receive the DCI and/or data, or in other words, it can be avoided that the communication apparatus is in a sleep state and cannot receive the DCI and/or data, so that reliability of data transmission is improved.

**502-5: The communication apparatus stops a fifth timer. The fifth timer/duration of the fifth timer indicates duration in which the communication apparatus receives retransmitted data. The fifth timer is a timer corresponding to DRX associated with unicast.**

For example, the fifth timer may be understood as a Retransmission Timer, or a Retransmission Timer corresponding to DRX associated with unicast.

For related content of "stopping the fifth timer", refer to related content of "stopping the second timer" in step 502-2. The second timer is replaced with the fifth timer for understanding, and details are not described herein again.

For example, the fifth timer corresponding to DRX associated with unicast (for example, corresponding to the first HARQ process) may be running (for example, the fifth timer corresponding to DRX associated with unicast may be started or restarted by the communication apparatus to ensure that the communication apparatus can receive retransmitted data that is subsequently transmitted by the network device in the C+C transmission manner (or the C+G transmission manner) because the communication apparatus previously receives DCI and/or data X (corresponding to the first HARQ process) transmitted in the C+G transmission manner, the G+G transmission manner, or the C+C transmission manner, or receives data X (corresponding to the first HARQ process) transmitted in the configured transmission manner), and the communication apparatus receives DCI and/or data Y (for example, newly transmitted data or retransmitted data, corresponding to the first HARQ process) transmitted in the C+G transmission manner, or receives data Y (for example, newly transmitted data or retransmitted data, corresponding to the first HARQ process) transmitted in the configured transmission manner. To save energy of the communication apparatus, the fifth timer corresponding to DRX associated with unicast may be stopped. It may be understood that, if the data Y is retransmitted data of the data X, it indicates that retransmission of the data X is received, and the fifth timer corresponding to DRX associated with unicast may be stopped. If the data Y is newly transmitted data, it indicates that the network device no longer retransmits the data X for the communication apparatus, and the fifth timer corresponding to DRX associated with unicast may be stopped.

For example, the fifth timer is associated with the first HARQ process.

It may be understood that the first data/first control information and the fifth timer correspond to a same HARQ process.

In another possible implementation, step 502-5 may be replaced with 502-5A.

**For example,** if the DRX associated with unicast does not include a HARQ-RTT-Timer, step **502-2 may be replaced with 502-2A.**

**502-5A: The communication apparatus starts or restarts a fifth timer, where the fifth timer/duration of the fifth timer indicates duration in which the communication apparatus receives retransmitted data. The fifth timer is a timer corresponding to DRX associated with unicast.**

For related content of "starting or restarting the fifth timer", refer to related content of "starting or restarting the second timer" in step 502-2A. The second timer is replaced with the fifth timer for understanding, and details are not described herein again.

For example, the communication apparatus receives DCI and/or data transmitted in the C+G transmission manner, or receives data transmitted in the configured transmission manner, and the network device may subsequently transmit other DCI and/or data in the C+C transmission manner (or the C+G transmission manner), or may retransmit the data in the C+C transmission manner (or the C+G transmission manner). To ensure that the communication apparatus can receive the DCI and/or data subsequently transmitted by the network device in the C+C transmission manner (or the C+G transmission manner), the communication apparatus may start or restart the fifth timer corresponding to DRX associated with unicast. In this way, if the network device transmits other DCI and/or data or retransmits the data in the C+C transmission manner (or the C+G transmission manner) within running duration of the fifth timer, it can be ensured that the communication apparatus can receive the DCI and/or data, or in other words, it can be avoided that the communication apparatus is in a sleep state and cannot receive the DCI and/or data, so that reliability of data transmission is improved.

**502-6: The communication apparatus starts or restarts a sixth timer, where the sixth timer/duration of the sixth timer indicates waiting duration before the communication apparatus receives the retransmitted data, and the sixth timer is a timer corresponding to DRX associated with unicast.**

For example, the sixth timer may be understood as a HARQ-RTT-Timer, or a HARQ-RTT-Timer corresponding to DRX associated with unicast.

For related content of "starting or restarting the sixth timer", refer to related content of "starting or restarting the third timer" in step 502-3. The third timer is replaced with the sixth timer for understanding, and details are not described herein again.

For example, the communication apparatus receives DCI and/or data transmitted in the C+G transmission manner, or receives data transmitted in the configured transmission manner, and the network device may subsequently transmit other DCI and/or data in the C+C transmission manner (or the C+G transmission manner), or may retransmit the data in the C+C transmission manner (or the C+G transmission manner). To ensure that the communication apparatus can receive the DCI and/or data subsequently transmitted by the network device in the C+C transmission manner (or the C+G transmission manner), the communication apparatus may start or restart the sixth timer corresponding to DRX associated with unicast. Optionally, after the sixth timer expires, the communication apparatus starts or restarts the fifth timer corresponding to DRX associated with unicast. In this way, if the network device transmits other DCI and/or data or retransmits the data in the C+C transmission manner (or the C+G transmission manner) within running duration of the fifth timer (and/or running duration of the sixth timer), it can be ensured that the communication apparatus can receive the DCI and/or data, or in other words, it can be avoided that the communication apparatus is in a sleep state and cannot receive the DCI and/or data, so that reliability of data transmission is improved. In addition, the communication apparatus starts or restarts the sixth timer corresponding to DRX associated with unicast, and after the sixth timer expires, starts or restarts the fifth timer corresponding to DRX associated with unicast. This can also avoid listening to retransmission of the data within running duration of the sixth timer, and facilitate energy saving of the communication apparatus.

For example, the sixth timer is associated with a third HARQ process.

It may be understood that the first data/first control information and the sixth timer correspond to a same HARQ process.

The fourth timer, the fifth timer, and the sixth timer all correspond to the third HARQ process.

The first HARQ process and the third HARQ process may be understood as a same HARQ process or two associated HARQ processes.

It should be noted that, in this embodiment, only the timer corresponding to DRX associated with multicast may be controlled, or only the timer corresponding to DRX associated with unicast may be controlled, or both the timer corresponding to DRX associated with multicast and the timer corresponding to DRX associated with unicast may be controlled. Any combination solution thereof falls within the protection scope of this application.

It should be noted that, in Embodiment 1.1, whether to start/stop/restart the timer corresponding to DRX associated with multicast or the timer corresponding to DRX associated the unicast, or whether to control the timer corresponding to DRX associated with multicast or the timer corresponding to DRX associated with unicast may be configured by the network device for each multicast service, that is, configured by the network device for each MBS service, or may be configured by the network device for each second RNTI, that is, configured by the network device for each second RNTI.

**Optionally, this embodiment further includes the following step: 503 (not shown in the figure): The communication apparatus receives second control information transmitted in the unicast manner, where the second control information is for scheduling second data transmitted in the multicast manner; and/or the communication apparatus receives the second data, where the second data is transmitted in the multicast manner. Alternatively, the communication apparatus receives second control information transmitted in the multicast manner, where the second control information is for scheduling second data transmitted in the multicast manner; and/or the communication apparatus receives the second data, where the second data is transmitted in the multicast manner. Alternatively,** the **communication apparatus receives second control information transmitted in the unicast manner, where the second control information is for scheduling second data transmitted in the unicast manner; and/or the communication apparatus receives the second data, where the second data is transmitted in single unicast manner. Correspondingly, the network device sends the second control information transmitted in the unicast manner to the communication apparatus, where the second control information is for scheduling the second data transmitted in the multicast manner; and/or the network device sends the second data to the communication apparatus, where the second data is transmitted in the multicast manner. Alternatively, the network device sends the second control information transmitted in the multicast manner to the communication apparatus, where the second control information is for scheduling the second data transmitted in the multicast manner; and/or the network device sends the second data to the communication apparatus, where the second data is transmitted in the multicast manner. Alternatively, the network device sends the second control information transmitted in the unicast manner to the communication apparatus, where the second control information is for scheduling the second data transmitted in the unicast manner; and/or the network device sends the second data to the communication apparatus, where the second data is transmitted in the unicast manner.**

For an understanding of "the second control information transmitted in the unicast manner", refer to the descriptions of "the first control information transmitted in the unicast manner" in step 501. "The first control information" is replaced with "the second control information" for understanding.

For an understanding of "transmitting the second data in the multicast manner" and "the second data is transmitted in the multicast manner", refer to the descriptions of "transmitting the first data in the multicast manner" or "the first data is transmitted in the multicast manner" in step 501. "The first data" is replaced with "the second data" for understanding.

For an understanding of "the second control information is for scheduling the second data to be transmitted in the multicast manner", refer to the descriptions of "the first control information is for scheduling the first data transmitted in the multicast manner" in step 501.

The second control information transmitted in the multicast manner may be understood as a PDCCH/DCI scrambled by using the first RNTI, or DCI transmitted on a PDCCH scrambled by using the second RNTI.

The first RNTI may be, for example, a C-RNTI, and the second RNTI may be, for example, a G-RNTI.

It may be understood that "the communication apparatus receives the second control information transmitted in the multicast manner" indicates that the second control information is specific to a plurality of communication apparatuses. In other words, the second control information is sent to a plurality of communication apparatuses in multicast.

The transmitting the second data in the unicast manner may be understood as: scrambling a PDSCH by using the first RNTI, or transmitting the second data on a PDSCH scrambled by using the first RNTI. The first RNTI may be, for example, a C-RNTI.

It may be understood that "the second data is transmitted in the unicast manner" indicates that the second data is specific to a specific communication apparatus. In other words, the second data is sent to a specific communication apparatus in multicast.

For example, the second control information and/or the second data are/is associated with the first HARQ process.

**Optionally, this embodiment further includes: 504: The communication apparatus performs the following steps 504-1 and/or 504-2.**

**504-1 (not shown in the figure): The communication apparatus stops the second timer.**

**504-2 (not shown in the figure): The communication apparatus stops the fifth timer.**

For example, the communication apparatus receives DCI 1/data 1 (corresponding to a HARQ process 1) transmitted in the C+G transmission manner, or the communication apparatus receives data 1 (for example, corresponding to the HARQ process 1) transmitted in the configured transmission manner. After the communication apparatus feeds back (for example, feeds back a NACK) to the network device, the communication apparatus starts both the second timer in DRX associated with multicast and the fifth timer in DRX associated with unicast. If the communication apparatus receives again DCI and/or data 2 that are/is transmitted in the G+G transmission manner, the C+G transmission manner, the C+C transmission manner, or the configured transmission manner and that are/is associated with a same HARQ process (for example, the HARQ process 1), the communication apparatus stops the fifth timer in DRX associated with unicast and the second timer in DRX associated with multicast.

It may be understood that, if the data 2 that is received again is retransmitted data of the data 1, it indicates that retransmission of the data 1 is received, and the fifth timer corresponding to DRX associated with unicast may be stopped, to reduce power consumption of the communication apparatus. Considering that downlink control information and/or newly transmitted data that are/is scheduled to transmit data in the multicast manner are/is not received, to further reduce power consumption, the communication apparatus may further stop the second timer corresponding to DRX associated with multicast. Alternatively, the communication apparatus may stop only the second timer to reduce power consumption.

If the data 2 is newly transmitted data, it indicates that the network device no longer retransmits the data 1 for the communication apparatus, and the fifth timer corresponding to DRX associated with unicast may be stopped, to reduce power consumption of the communication apparatus. Considering that downlink control information and/or newly transmitted data that are/is scheduled to transmit data in the multicast manner are/is not received, to further reduce power consumption, the communication apparatus may further stop the second timer corresponding to DRX associated with multicast. Alternatively, the communication apparatus may stop only the second timer to reduce power consumption.

It should be noted that, step 503 and step 504 may be used as separate embodiments.

It may be understood that the communication apparatus receives the second control information and/or the second data within the active time of the DRX associated with multicast or active time of the DRX associated with unicast.

For example, the active time of the DRX associated with multicast may include any one or more of the following: (time in which) the first timer corresponding to the DRX associated with multicast is running, (time in which) the second timer (which may include a plurality of second timers corresponding to different HARQ processes) corresponding to the DRX associated with multicast is running, and (time in which) a drx-onDurationTimer corresponding to the DRX associated with multicast is running. For example, a start moment of the drx-onDurationTimer corresponding to the DRX associated with multicast may be determined based on some parameters.

For example, the active time of the DRX associated with unicast may include any one or more of the following: (time in which) the fourth timer corresponding to the DRX associated with unicast is running, (time in which) the fifth timer (which may include a plurality of fifth timers corresponding to different HARQ processes) corresponding to the DRX associated with unicast is running, and (time in which) a drx-onDurationTimer corresponding to the DRX associated with unicast is running. For example, a start moment of the drx-onDurationTimer corresponding to the DRX associated with unicast may be determined based on some parameters.

For example, the network device transmits multicast data 1 in the G+G transmission manner, and the network device may retransmit the multicast data 1 in the G+G transmission manner, the C+G transmission manner, or the C+C transmission manner.

### Problem A:

The communication apparatus receives DCI 1/data 1 transmitted in the G+G transmission manner. Subsequently, the network device may retransmit the data 1 in the G+G transmission manner, the C+G transmission manner, or the C+C transmission manner. Currently, there is no effective solution to how to ensure that the communication apparatus can receive the retransmitted data 1 subsequently transmitted by the network device in the G+G transmission manner, the C+G transmission manner, or the C+C transmission manner.

On the basis of resolving the problem A, there may be still some problems. This may cause high power consumption of the communication apparatus, or may be unfavorable to energy saving of the communication apparatus. For example:

### Problem B:

The communication apparatus receives DCI 1/data 1 transmitted in the G+G transmission manner (for example, corresponding to the HARQ process 1). To ensure that the communication apparatus can receive the retransmitted data 1 subsequently transmitted by the network device in the G+G transmission manner, the C+G transmission manner, or the C+C transmission manner, the communication apparatus may start or restart a timer (for example, a second timer or a Retransmission Timer, associated with the HARQ process 1) that is used for retransmission and that is corresponding to DRX associated with multicast, and/or a timer (for example, a fifth timer or a Retransmission Timer, associated with a HARQ process 1) that is used for retransmission and that is corresponding to DRX associated with unicast, to listen to a PDCCH for retransmission of the data 1. If the communication apparatus receives DCI and/or data (for example, the retransmitted data 1 or other data) that is transmitted in the G+G transmission manner, the C+G transmission manner, the C+C transmission manner, or the configured transmission manner and that is associated with a same HARQ process (for example, the HARQ process 1), the communication apparatus still listens to the PDCCH (for example, the PDCCH for retransmission of the data 1). This increases power consumption of the communication apparatus.

### Embodiment 1.2

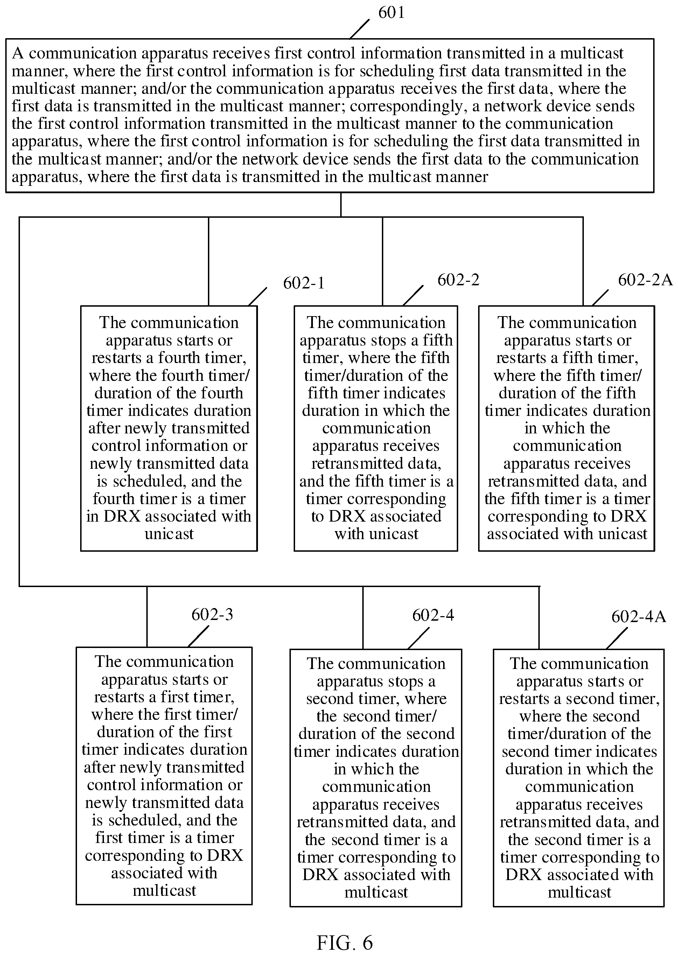

Similar to Embodiment 1.1, for the problem A, to ensure that the communication apparatus can receive the unicast data (in other words, to avoid that the communication apparatus cannot receive the unicast data), and/or to save energy of the communication apparatus, this application further provides a DRX control method. As shown in FIG. 6, the method includes the following steps.

**601: A communication apparatus receives first control information transmitted in a multicast manner, where the first control information is for scheduling first data transmitted in the multicast manner; and/or the communication apparatus receives the first data, where the first data is transmitted in the multicast manner. Correspondingly, a network device sends the first control information transmitted in the multicast manner to the communication apparatus, where the first control information is for scheduling the first data transmitted in the multicast manner; and/or the network device sends the first data to the communication apparatus, where the first data is transmitted in the multicast manner.**

**The first control information transmitted in the multicast manner may include/be understood as any one or more of the following:**
(1) The first control information is transmitted on a first resource, where the first resource is a resource associated with multicast.

That the first resource is a resource associated with multicast may be understood as follows: The first resource is in a common frequency resource corresponding to multicast.

For example, the first resource may be a PDCCH resource.

(2) The first control information is scrambled by using a second RNTI.

For example, the first control information transmitted in the multicast manner may be a PDCCH/DCI scrambled by using a G-RNTI, or DCI transmitted on a PDCCH scrambled by using a G-RNTI.

It may be understood that "a communication apparatus receives first control information transmitted in a multicast manner" indicates that the first control information is specific to a plurality of communication apparatuses. In other words, the first control information is sent to a plurality of communication apparatuses in multicast.

**For an understanding of "the first data transmitted in the multicast manner" or "the first data is transmitted in the multicast manner" in step 601, refer to the descriptions in step 501.**

**For an understanding of "the first control information is for scheduling first data transmitted in the multicast manner" in step 601, refer to the descriptions in step 501.**

It may be understood that the communication apparatus receives the first control information transmitted in the multicast manner, and the first control information sent by the network device to the plurality of communication apparatuses is the same. The first control information received by each of the plurality of communication apparatuses is the same.

**602: The communication apparatus performs any one or more of the following steps 602-1, 602-2, and 602-2A; and/or the communication apparatus performs any one or more of the following steps 602-4, 602-5, and 602-5A.**

Optionally, before the communication apparatus performs any one or more of steps 602-1, 602-2, and 602-2A, the method further includes: The communication apparatus receives third indication information.

For an understanding of "the third indication information", refer to the descriptions of "the first indication information" in step 502, and "the first indication information" is replaced with "the third indication information" for understanding.

Optionally, before the communication apparatus performs any one or more of steps 602-4, 602-5, and 602-5A, the method further includes: The communication apparatus receives fourth indication information.

For an understanding of "the fourth indication information", refer to the descriptions of "the second indication information" in step 502, and "the second indication information" is replaced with "the fourth indication information" for understanding.

**602-1: The communication apparatus starts or restarts a fourth timer, where the fourth timer/duration of the fourth timer** indicates duration after newly transmitted control information or newly transmitted data is scheduled. **The fourth timer is a timer in DRX associated with unicast.**

It should be noted that in this application (or a definition/function of the fourth timer/the duration of the fourth timer), whether the fourth timer is started immediately after being used to schedule newly transmitted control information or newly transmitted data or is started after a period of time is not limited.

For example, the fourth timer may be understood as an Inactivity Timer, or an Inactivity Timer corresponding to DRX associated with unicast.

For related content of "starting or restarting the fourth timer" in step 602-1, refer to related content of "starting or restarting the fourth timer" in step 502-4, and details are not described herein again. A difference lies in that the fourth timer in step 602-1 is associated with unicast.

For example, the communication apparatus receives DCI and/or data transmitted in the G+G transmission manner, and the network device may subsequently transmit other DCI and/or data in the C+C transmission manner (or the C+G transmission manner), or may retransmit the data in the C+C transmission manner (or the C+G transmission manner). To ensure that the communication apparatus can receive the DCI and/or data subsequently transmitted by the network device in the C+C transmission manner (or the C+G transmission manner), the communication apparatus may start the fourth timer corresponding to DRX associated with unicast. In this way, if the network device transmits other DCI and/or data or retransmits the data in the C+C transmission manner (or the C+G transmission manner) within running duration of the fourth timer, it can be ensured that the communication apparatus can receive the DCI and/or the data, or in other words, it can be avoided that the communication apparatus is in a sleep state and cannot receive the DCI and/or the data, so that reliability of data transmission is improved.

**602-2: The communication apparatus stops a fifth timer, where the fifth timer/duration of the fifth timer indicates duration in which the communication apparatus receives retransmitted data. The fifth timer is a timer corresponding to DRX associated with unicast.**

For related content of "stopping the fifth timer" in step 602-2, refer to related content of "stopping the fifth timer" in step 502-5, and details are not described herein again. A difference lies in that the fifth timer in step 602-2 is a timer corresponding to DRX associated with unicast.

The fifth timer corresponding to DRX associated with unicast (for example, corresponding to the first HARQ process) may be running (for example, the fifth timer corresponding to DRX associated with unicast may be started or restarted by the communication apparatus to ensure that the communication apparatus can receive retransmitted data that is subsequently transmitted by the network device in the C+C transmission manner (or the C+G transmission manner) because the communication apparatus previously receives DCI and/or data X (corresponding to the first HARQ process) transmitted in the C+G transmission manner, the G+G transmission manner, or the C+C transmission manner, or receives data X (corresponding to the first HARQ process) transmitted in the configured transmission manner), and the communication apparatus receives DCI and/or data Y (for example, newly transmitted data or retransmitted data, corresponding to the first HARQ process) transmitted in the C+G transmission manner, or receives data Y (for example, newly transmitted data or retransmitted data, corresponding to the first HARQ process) transmitted in the configured transmission manner. To save energy of the communication apparatus, the fifth timer corresponding to DRX associated with unicast may be stopped. It may be understood that, if the data Y is retransmitted data of the data X, it indicates that retransmission of the data X is received, and the fifth timer corresponding to DRX associated with unicast may be stopped. If the data Y is newly transmitted data, it indicates that the network device no longer retransmits the data X for the communication apparatus, and the fifth timer corresponding to DRX associated with unicast may be stopped.

For example, the fifth timer is associated with the first HARQ process.

It may be understood that the first data/first control information and the fifth timer correspond to a same HARQ process.

In another possible implementation, step **602-2 may be replaced with step 602-2A.**

**For example,** if the DRX associated with unicast does not include a HARQ-RTT-Timer, step **602-2 may be replaced with 602-2A.**

**602-2A: The communication apparatus starts or restarts a fifth timer, where the fifth timer/duration of the fifth timer indicates duration in which the communication apparatus receives retransmitted data. The fifth timer is a timer corresponding to DRX associated with unicast.**

For related content of "starting or restarting the fifth timer" in step 602-2A, refer to related content of "starting or restarting the fifth timer" in step 502-5A. Details are not described herein again.

For example, the communication apparatus receives DCI and/or data transmitted in the G+G transmission manner, and the network device may subsequently transmit other DCI and/or data in the C+C transmission manner (or the C+G transmission manner), or may retransmit the data in the C+C transmission manner (or the C+G transmission manner). To ensure that the communication apparatus can receive the DCI and/or data subsequently transmitted by the network device in the C+C transmission manner (or the C+G transmission manner), the communication apparatus may start or restart the fifth timer corresponding to DRX associated with unicast. In this way, if the network device transmits other DCI and/or data or retransmits the data in the C+C transmission manner (or the C+G transmission manner) within running duration of the fifth timer, it can be ensured that the communication apparatus can receive the DCI and/or the data, or in other words, it can be avoided that the communication apparatus is in a sleep state and cannot receive the DCI and/or the data, so that reliability of data transmission is improved.

602-3: **The communication apparatus starts or restarts a first timer, where the first timer/duration of the first timer indicates duration after newly transmitted control information or newly transmitted data is scheduled, and the first timer is a timer corresponding to DRX associated with multicast.**

For an understanding of "**starting or restarting the first timer**" in step 602-3, refer to the descriptions in step 502-1.

For example, the communication apparatus receives DCI and/or data transmitted in the G+G transmission manner, and the network device may subsequently transmit other DCI and/or data in the G+G transmission manner (or the C+G transmission manner), or may retransmit the data in the G+G transmission manner (or the C+G transmission manner). To ensure that the communication apparatus can receive DCI and/or data subsequently transmitted by the network device in the G+G transmission manner (or the C+G transmission manner), the communication apparatus may start the first timer corresponding to DRX associated with multicast. In this way, if the network device transmits other DCI and/or data or retransmits the data in the G+G transmission manner (or the C+G transmission manner) within running duration of the first timer, it can be ensured that the communication apparatus can receive the DCI and/or data, or in other words, it can be avoided that the communication apparatus is in a sleep state and cannot receive the DCI and/or data, so that reliability of data transmission is improved.

602-4: **The communication apparatus stops a second timer, where the second timer/duration of the second timer indicates duration in which the communication apparatus receives retransmitted data, and the second timer is a timer corresponding to DRX associated with multicast.** For an understanding of "**stopping the second timer**" in step 602-4, refer to the descriptions in step 502-2.

For example, the second timer corresponding to DRX associated with multicast (for example, corresponding to a first HARQ process) may be running (for example, the second timer corresponding to DRX associated with multicast may be started or restarted by the communication apparatus to ensure that the communication apparatus can receive retransmitted data that is subsequently transmitted by the network device in the G+G transmission manner (or the C+G transmission manner) because the communication apparatus previously receives DCI and/or data X (corresponding to the first HARQ process) transmitted in the C+G transmission manner or the G+G transmission manner, and the communication apparatus receives DCI and/or data Y (for example, newly transmitted data or retransmitted data, corresponding to the first HARQ process) transmitted in the C+G transmission manner. To save energy of the communication apparatus, the second timer corresponding to DRX associated with multicast may be stopped. It may be understood that, if the data Y is retransmitted data of the data X, it indicates that retransmission of the data X is received, and the second timer corresponding to DRX associated with multicast may be stopped. If the data Y is newly transmitted data, it indicates that the network device no longer retransmits the data X for the communication apparatus, and the second timer corresponding to DRX associated with multicast may be stopped.

In another possible implementation, step 602-4 may be replaced with 602-4A.

**For example,** if the DRX associated with multicast does not include a HARQ-RTT-Timer, step **602-4 may be replaced with 602-4A.**

**602-4A: The communication apparatus starts or restarts a second timer, where the second timer/duration of the second timer indicates duration in which the communication apparatus receives retransmitted data, and the second timer is a timer corresponding to DRX associated with multicast.**

For an understanding of "**starting or restarting the second timer**" in step 602-4A, refer to the descriptions in step 502-2A.

For example, the communication apparatus receives DCI and/or data transmitted in the G+G transmission manner, or receives data transmitted in the configured transmission manner, and the network device may subsequently transmit other DCI and/or data in the G+G transmission manner (or the C+G transmission manner), or may retransmit the data in the G+G transmission manner (or the C+G transmission manner). To ensure that the communication apparatus can receive DCI and/or data subsequently transmitted by the network device in the G+G transmission manner (or the C+G transmission manner), the communication apparatus may start or restart the second timer corresponding to DRX associated with multicast. In this way, if the network device transmits other DCI and/or data or retransmits the data in the G+G transmission manner (or the C+G transmission manner) within running duration of the second timer, it can be ensured that the communication apparatus can receive the DCI and/or data, or in other words, it can be avoided that the communication apparatus is in a sleep state and cannot receive the DCI and/or data, so that reliability of data transmission is improved.

It should be noted that, in this embodiment, only the timer corresponding to DRX associated with unicast may be controlled, or only the timer corresponding to DRX associated with multicast may be controlled, or both the timer corresponding to DRX associated with multicast and the timer corresponding to DRX associated with unicast may be controlled. Any combination solution thereof falls within the protection scope of this application.

It should be noted that, in Embodiment 1.2, whether to start/stop/restart the timer corresponding to DRX associated with unicast or the timer corresponding to DRX associated the multicast, or whether to control the timer corresponding to DRX associated with unicast or the timer corresponding to DRX associated with multicast may be configured by the network device for each multicast service, that is, configured by the network device for each MBS service, or may be configured by the network device for each second RNTI, that is, configured by the network device for each second RNTI.

Optionally, this embodiment further includes the following step: 603 (not shown in the figure): **The communication apparatus receives second control information transmitted in the unicast manner, where the second control information is for scheduling second data transmitted in the multicast manner; and/or the communication apparatus receives the second data, where the second data is transmitted in the multicast manner. Alternatively, the communication apparatus receives second control information transmitted in the multicast manner, where the second control information is for scheduling second data transmitted in the multicast manner; and/or the communication apparatus receives the second data, where the second data is transmitted in the multicast manner. Alternatively, the communication apparatus receives second control information transmitted in the unicast manner, where the second control information is for scheduling second data transmitted in the unicast manner; and/or the communication apparatus receives the second data, where the second data is transmitted in single unicast manner. Correspondingly, the network device sends the second control information transmitted in the unicast manner to the communication apparatus, where the second control information is for scheduling the second data transmitted in the multicast manner; and/or the network device sends the second data to the communication apparatus, where the second data is transmitted in the multicast manner. Alternatively, the network device sends the second control information transmitted in the multicast manner to the communication apparatus, where the second control information is for scheduling the second data transmitted in the multicast manner; and/or the network device sends the second data to the communication apparatus, where the second data is transmitted in the multicast manner. Alternatively, the network device sends the second control information transmitted in the unicast manner to the communication apparatus, where the second control information is for scheduling the second data transmitted in the unicast manner; and/or the network device sends the second data to the communication apparatus, where the second data is transmitted in the unicast manner.**

For an understanding of step 603, refer to the descriptions of step 503 in the foregoing embodiment.

**Optionally, this embodiment further includes: 604** (not shown in the figure): **The communication apparatus performs the following steps 604-1 and/or 604-2.**

604-1: **The communication apparatus stops the second timer.**

**604-2: The communication apparatus stops a fifth timer.**

For example, the communication apparatus receives DCI 1/data 1 (corresponding to a HARQ process 1) transmitted in the G+G transmission manner. After the communication apparatus feeds back (for example, feeds back a NACK) to the network device, the communication apparatus starts both the second timer in DRX associated with multicast and the fifth timer in DRX associated with unicast. If the communication apparatus receives again DCI and/or data 2 that are/is transmitted in the G+G transmission manner, the C+G transmission manner, the C+C transmission manner, or the configured transmission manner and that are/is associated with a same HARQ process (for example, the HARQ process 1), the communication apparatus stops the fifth timer in DRX associated with unicast and the second timer in DRX associated with multicast.

It may be understood that, if the data 2 that is received again is retransmitted data of the data 1, it indicates that retransmission of the data 1 is received, and the second timer corresponding to DRX associated with multicast may be stopped, to reduce power consumption of the communication apparatus. Considering that downlink control information and/or newly transmitted data that are/is scheduled to transmit data in the unicast manner are/is not received, to further reduce power consumption, the communication apparatus may further stop the fifth timer corresponding to DRX associated with unicast. Alternatively, the communication apparatus may stop only the fifth timer to reduce power consumption.

If the data 2 is newly transmitted data, it indicates that the network device no longer retransmits the data 1 for the communication apparatus, and the second timer corresponding to DRX associated with multicast may be stopped, to reduce power consumption of the communication apparatus. Considering that downlink control information and/or newly transmitted data that are/is scheduled to transmit data in the unicast manner are/is not received, to further reduce power consumption, the communication apparatus may further stop the fifth timer corresponding to DRX associated with unicast. Alternatively, the communication apparatus may stop only the fifth timer to reduce power consumption.

### Embodiment 2.1

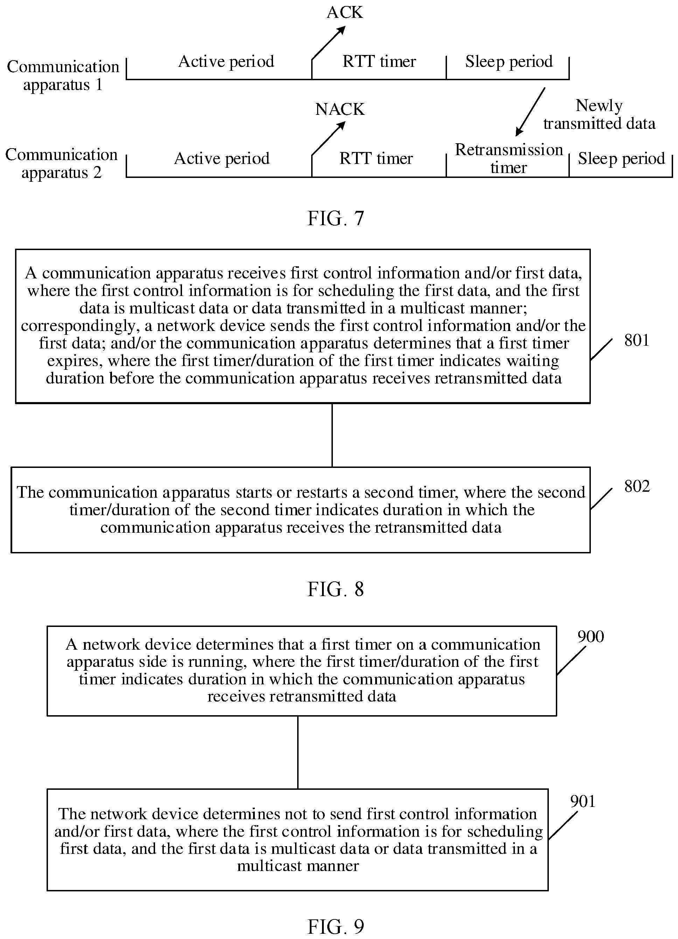

Based on the foregoing analysis, in the MBS, if the communication apparatus starts the RTT timer (HARQ-RTT-Timer) after receiving the DCI and/or data, and after the HARQ-RTT-Timer expires, the communication apparatus starts the retransmission timer (RetransmissionTimer) only when the communication apparatus fails to receive the data, active occasions of different communication apparatuses that receive the same MBS may be not aligned. Specifically, in the MBS, different communication apparatuses that receive the same MBS service may receive the MBS service successfully, or may fail to receive the MBS service. In this case, active time of two communication apparatuses may be not aligned, and consequently, the communication apparatuses may fail to receive the DCI and/or data. As shown in FIG. 7, for example, after receiving DCI and/or data in an active period, a communication apparatus 1 starts a HARQ-RTT-Timer, and enters a sleep period after the RTT timer expires (if no other timer related to DRX active time is running), and after receiving the DCI and/or data in an active period, a communication apparatus 2 starts a HARQ-RTT-Timer, starts a RetransmissionTimer after the RTT timer expires, and enters a sleep period only after the retransmission timer expires (if no other timer related to the DRX active time is running). If the network device sends newly transmitted data in running duration of the RetransmissionTimer (if no other timer related to the DRX active time is running in this period of time for the communication apparatus 1, that is, the communication apparatus 1 is in a sleep state), the communication apparatus 1 may not receive the newly transmitted data in the sleep period.

The foregoing problem also exists in V2X, similar to that in the MBS. In the V2X, if the communication apparatus starts the HARQ-RTT-Timer after receiving SCI and/or data, and after the HARQ-RTT-Timer expires, the RetransmissionTimer is started only when the communication apparatus fails to receive the data, active occasions of different communication apparatuses that receive a same V2X multicast may be not aligned. Specifically, in the V2X, different communication apparatuses that receive the same V2X multicast may receive the V2X multicast successfully, or may fail to receive the V2X multicast. In this case, active time of two communication apparatuses may be not aligned, and consequently, the communication apparatuses may fail to receive the SCI and/or data. As shown in FIG 7, for example, after receiving SCI and/or data in an active period, a communication apparatus 1 starts a HARQ-RTT-Timer, and enters a sleep period after the RTT timer expires (if no other timer related to DRX active time is running), and after receiving the SCI and/or data in an active period, a communication apparatus 2 starts a HARQ-RTT-Timer, starts a RetransmissionTimer after the RTT timer expires, and enters a sleep period only after the RetransmissionTimer expires (if no other timer related to the DRX active time is running). If a sending device sends newly transmitted data in running duration of the RetransmissionTimer (if no other timer related to the DRX active time is running in this period of time for the communication apparatus 1, that is, the communication apparatus 1 is in a sleep state), the communication apparatus 1 may not receive the newly transmitted data in the sleep period.

In this case, an embodiment of this application provides a DRX control method. In the method, for data transmitted in a multicast manner or multicast data, regardless of whether a communication apparatus successfully receives the data, a RetransmissionTimer is started or restarted, so that an active period of a communication apparatus that feeds back an ACK (or that the reception succeeds) is aligned with an active period of a communication apparatus that feeds back a NACK (or that the reception fails). In this way, within running duration of the retransmission timer, if a sending device (for example, a network device or a terminal device) sends newly transmitted data, the communication apparatus that feeds back the ACK (or that the reception succeeds) may also receive the newly transmitted data because the communication apparatus that feeds back the ACK is in the active period.

Therefore, as shown in FIG. 8, the DRX control method may include the following steps.

**800: A communication apparatus receives first control information and/or first data, where the first control information is for scheduling the first data, and the first data is multicast data or data transmitted in a multicast manner; correspondingly, a network device sends the first control information and/or the first data; and/or the communication apparatus determines that a first timer expires, where the first timer/duration of the first timer indicates waiting duration before the communication apparatus receives retransmitted data.**

**The first control information may include/be understood as any one or more of the following:**
(1) First DCI.

For example, the first DCI is for scheduling the first data, the first data is downlink data, and the first data is data transmitted in the multicast manner.

### (2) First SCI.

For example, the first SCI is for scheduling the first data, the first data is SL data, and the first data is multicast data.

**That the first data is multicast data may include/be understood as any one or more of the following:**
(1) The first data is transmitted on a second resource, where the second resource is a resource associated with multicast.
(2) The first data is scrambled by using a second RNTI.

For related content of (1) and (2), refer to the descriptions of related content in Embodiment 1.1, and details are not described herein again.

For example, the first data may be data transmitted in a C+G transmission manner, or may be data transmitted in a G+G transmission manner.

(3) The first data is multicast data transmitted in a C+C transmission manner.

(4) The first control information indicates that the first data is multicast data, or indicates that transmission corresponding to the first control information is multicast (transmission).

For example, the first SCI indicates that the first data is multicast data, or indicates that transmission corresponding to the first SCI is multicast (transmission).

**For related content of "the first data is data transmitted in a multicast manner", refer to an understanding of related content of "the first data transmitted in the multicast manner" or "the first data is transmitted in the multicast manner" in Embodiment 1.1, and details are not described herein again.**

For example, when the first data is downlink data, the first data is multicast data or data transmitted in the multicast manner.

For example, when the first data is SL data, the first data is multicast data.

**That the communication apparatus receives the first control information and/or the first data may include/be understood as any one or more of the following:**
(1) The communication apparatus receives first control information transmitted in a unicast manner, where the first control information is for scheduling first data transmitted in the multicast manner; and/or the communication apparatus receives the first data, where the first data is transmitted in the multicast manner.

For related content of "the first control information transmitted in the unicast manner", refer to the descriptions of related content in Embodiment 1.1, and details are not herein again.

(2) The communication apparatus receives first control information transmitted in the multicast manner, where the first control information is for scheduling first data transmitted in the multicast manner; and/or the communication apparatus receives the first data, where the first data is transmitted in the multicast manner.

For related content of "the first control information transmitted in the multicast manner", refer to the descriptions of related content in Embodiment 1.2, and details are not herein again.

(3) The communication apparatus receives first control information transmitted in the unicast manner, where the first control information is for scheduling first data transmitted in the unicast manner; and/or the communication apparatus receives the first data, where the first data is transmitted in the unicast manner.

For an understanding of "the first control information transmitted in the unicast manner" in 800, refer to the content in Embodiment 1.1.

For an understanding of "transmitting the first data in the unicast manner" in step 800, refer to the content of "transmitting the second data in the unicast manner" in Embodiment 1.1, and "the second data" is replaced with "the first data" for understanding.

For example, the first timer may be understood as a HARQ-RTT-Timer.

For example, the first timer may include a first timer (for example, a HARQ-RTT-Timer) corresponding to DRX associated with multicast, and/or a first timer (for example, a HARQ-RTT-Timer) corresponding to DRX associated with unicast.

For example, the first control information and/or the first data are/is associated with the first HARQ process.

For example, the first timer is associated with a second HARQ process. The first HARQ process and the second HARQ process may be understood as a same HARQ process or two associated HARQ processes.

For example, the first data/first control information and the first timer correspond to a same HARQ process.

**801: The communication apparatus starts or restarts a second timer, where the second timer/duration of the second timer indicates duration in which the communication apparatus receives retransmitted data.**

For example, the second timer may be understood as a RetransmissionTimer.

For example, the second timer may include a second timer (for example, a RetransmissionTimer) corresponding to DRX associated with multicast, and/or a second timer (for example, a RetransmissionTimer) corresponding to DRX associated with unicast.

**Optionally, before the communication apparatus determines that the first timer expires, the method may further include: The communication apparatus receives first downlink control information and/or the first data; and the communication apparatus starts the first timer.**

Optionally, the starting or restarting the first timer includes: The communication apparatus sends first feedback information, where the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and starts or restarts the first timer.

The first feedback information may include an ACK and/or a NACK.

For example, that the first feedback resource is associated with the first data may include/be understood as that the first feedback resource is used by the communication apparatus to send the first feedback information.

For example, the first feedback resource may be the 1^{st} feedback resource in time domain or the last feedback resource in time domain that is associated with the first data. This is not limited in this application. For example, a plurality of communication apparatuses receive the first data, and feedback resources corresponding to the plurality of communication apparatuses may be the same in time domain (for example, may be time division). The first feedback resource may be the 1^{st} feedback resource in time domain or the last feedback resource in time domain in the plurality of feedback resources. In this way, active time (active time of DRX associated with multicast) of different communication apparatuses can be aligned, to ensure that the communication apparatus can receive the control information and/or data sent by the network device.

For example, the communication apparatus may send the first feedback information on a PUCCH resource or a PUSCH resource.

For example, the first feedback resource may include the PUCCH resource.

Optionally, the following condition needs to be met for starting or restarting the first timer: The communication apparatus fails to receive/decode the first data.

Optionally, the communication apparatus may start the first timer after third duration/at a third moment after the first control information is received, or start the first timer after the third duration/at the third moment after the first data is received, or start the first timer after the third duration/at the third moment after the first feedback information is sent, or start the first timer after the third duration/at the third moment after the first feedback time.

The third moment may be a c^{th} symbol/slot/subframe/frame or the like. c is an integer greater than or equal to 0. A value of the third moment/a value of c/a value of the third duration may be configured or preconfigured by the network device, or specified in a protocol. This is not limited in this application.

**Optionally, that the communication apparatus starts or restarts the second timer includes: When the communication apparatus successfully receives the first data or fails to receive the first data, the communication apparatus starts or restarts the second timer. Alternatively, optionally, the following condition needs to be met for starting or restarting the second timer: The communication apparatus receives/decodes the first data successfully or fails to receive/decode the first data.**

For example, the second timer is associated with the second HARQ process. The first HARQ process and the second HARQ process may be understood as a same HARQ process or two associated HARQ processes.

For example, the first data/first control information and the second timer correspond to a same HARQ process.

**Optionally, the starting or restarting the second timer includes: The communication apparatus sends first feedback information, where the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and starts or restarts the second timer.**

The first feedback information may include an ACK and/or a NACK.

For example, that the first feedback resource is associated with the first data may include/be understood as that the first feedback resource is used by the communication apparatus to send the first feedback information.

For example, the first feedback resource may be the 1^{st} feedback resource in time domain or the last feedback resource in time domain that is associated with the first data. This is not limited in this application. For example, a plurality of communication apparatuses receive the first data, and feedback resources corresponding to the plurality of communication apparatuses may be the same in time domain (for example, may be time division). The first feedback resource may be the 1^{st} feedback resource in time domain or the last feedback resource in time domain in the plurality of feedback resources. In this way, active time (active time of DRX associated with multicast) of different communication apparatuses can be aligned, to ensure that the communication apparatus can receive the control information and/or data sent by the network device.

For example, the communication apparatus may send the first feedback information on a PUCCH resource or a PUSCH resource.

For example, the first feedback resource may include the PUCCH resource.

Optionally, the following condition needs to be met for starting or restarting the second timer: The communication apparatus fails to receive/decode the first data.

Optionally, the communication apparatus may start the second timer after second duration/at a second moment after the first control information is received, or start the second timer after the second duration/at the second moment after the first data is received, or start the second timer after the second duration/at the second moment after the first feedback information is sent, or start the second timer after the second duration/at the second moment after the first feedback time.

The second moment may be a b^{th} symbol/slot/subframe/frame or the like. b is an integer greater than or equal to 0. A value of the second moment/a value of b/a value of the second duration may be configured or preconfigured by the network device, or specified in a protocol. This is not limited in this application.

For example, after the communication apparatus determines that the HARQ-RTT-Timer expires, if the first data is multicast data or data transmitted in the multicast manner, the communication apparatus starts the RetransmissionTimer, that is, when the first data is successfully received or fails to be received, the communication apparatus starts the RetransmissionTimer, to align active time of a plurality of communication apparatuses in the multicast manner, so that the plurality of communication apparatuses can receive, within timing duration of the RetransmissionTimer, newly transmitted data transmitted by the network device.

For example, after receiving the first control information and/or the first data, where the first data is multicast data or data transmitted in the multicast manner, the plurality of communication apparatuses start the first timer. After the first timer expires, the communication apparatuses start the second timer regardless of whether the communication apparatuses successfully receive the first data, to align the activation time of the plurality of communication apparatuses. If a transmit end device (for example, a network device, another communication apparatus, or a terminal device) sends other control information and/or data (for example, newly transmitted data) within running duration of the second timer, it can be ensured that the communication apparatuses can receive the control information and/or the data, or in other words, it can be avoided that the communication apparatuses (for example, some communication apparatuses) are in a sleep state and cannot receive the control information and/or the data, so that reliability of data transmission is improved.

For example, after receiving the first control information and/or the first data, where the first data is multicast data or data transmitted in the multicast manner, the plurality of communication apparatuses start the second timer regardless of whether the communication apparatuses successfully receive the first data, to align the activation time of the plurality of communication apparatuses. If a transmit end device (for example, a network device, another communication apparatus, or a terminal device) sends other control information and/or data (for example, newly transmitted data) within running duration of the second timer, it can be ensured that the communication apparatuses can receive the control information and/or the data, or in other words, it can be avoided that the communication apparatuses (for example, some communication apparatuses) are in a sleep state and cannot receive the control information and/or the data, so that reliability of data transmission is improved.

Optionally, the communication apparatus receives first information, where the first information instructs the communication apparatus to receive the first control information and/or the first data; and/or the communication apparatus determines that the first timer expires, and the communication apparatus starts or restarts the second timer. For example, the first indication may indicate whether step **801** is allowed to be performed, or whether the foregoing solution is allowed to be performed.

It may be understood that, in a possible solution, the communication apparatus receives the first information, and the communication apparatus performs step 800 and step **801.** Alternatively, in a possible solution, before performing step **801**, the communication apparatus further needs to meet the following condition: The communication apparatus receives the first information.

For example, a transmit end device (a network device, another communication apparatus, or a terminal device) or the network device may determine, for each multicast service (or MBS service)/second RNTI, whether to send the first information. Alternatively, it may be understood as that: A transmit end device (a network device, another communication apparatus, or a terminal device) or the network device may configure, for each multicast service/second RNTI, whether to allow the communication apparatus to perform the foregoing solution. A configuration granularity is each multicast service/second RNTI.

Embodiment 1.2 may be understood as providing a method from a perspective of a receive side to resolve the problem of active time alignment. This application may also provide a method from a transmit side to resolve the problem of active time alignment on the receive side. For details, refer to Embodiment 2.2.

It should be noted that Embodiment 2.1 is also applicable to a scenario in which multicast data is transmitted between communication apparatuses or data is transmitted in the multicast manner between communication apparatuses. That is, when a communication apparatus serving as the receive end determines that the first timer expires, the communication apparatus serving as the receive end starts or restarts the second timer, so that active periods of communication apparatuses serving as the receive end in a same multicast are aligned.

### Embodiment 2.2

This application provides a DRX control method. As shown in FIG. 9, the method includes the following steps.

**900: The network device determines that a first timer on a communication apparatus side is running, where the first timer/duration of the first timer indicates duration in which the communication apparatus receives the retransmitted data.**

**901: The network device determines not to send first control information and/or first data, where the first control information is for scheduling first data, and the first data is multicast data or data transmitted in a multicast manner.**

For example, the first timer may be understood as a RetransmissionTimer.

For example, the first timer may include a first timer (for example, a RetransmissionTimer) corresponding to DRX associated with multicast.

For content related to "the first control information" and "the first data", refer to descriptions of related content in Embodiment 2.1, Embodiment 1.1, and Embodiment 1.2. Details are not described herein again.

For example, the first control information is transmitted in the multicast manner.

For example, the first control information may be first DCI, the first DCI is for scheduling the first data, the first data is downlink data, and the first data is data transmitted in the multicast manner.

For example, the first control information may be first SCI, the first SCI is for scheduling the first data, the first data is SL data, and the first data is multicast data.

**Optionally, the first data is newly transmitted data.**

**Optionally, that the network device determines not to send new data further includes/the following condition needs to be met: The network device determines that neither a second timer nor a third timer on the communication apparatus side is running.**

The second timer indicates duration after newly transmitted control information or newly transmitted data is scheduled.

For example, the second timer may be understood as an Inactivity Timer.

For example, the second timer may include a second timer (for example, an Inactivity Timer) corresponding to DRX associated with multicast.

The third timer indicates duration in which the communication apparatus waits to receive control information (for example, DCI or SCI) after being woken up.

For example, the third timer may be understood as an onDuration Timer.

For example, the third timer may include a third timer (for example, an onDuration Timer) corresponding to DRX associated with multicast.

**Optionally, that the network device determines not to send new data further includes/the following condition needs to be met: The network device determines that none of a fourth timer, a second timer, and a third timer on the communication apparatus side is running.**

The fourth timer indicates waiting duration before the communication apparatus receives the retransmitted data.

For example, the fourth timer may be understood as a HARQ-RTT-Timer.

For example, the fourth timer may include a fourth timer (for example, a HARQ-RTT-Timer) corresponding to DRX associated with multicast.

**Optionally, that the network device determines not to send new data further includes/the following condition needs to be met: The network device determines that a first timer on another communication apparatus side is not running.**

The communication apparatus and the another communication apparatus both (are interested in receiving/expect to) receive the first control information and/or the first data.

The second timer indicates duration after newly transmitted control information or newly transmitted data is scheduled.

For example, the second timer may be understood as an Inactivity Timer.

For example, the second timer may include a second timer (for example, an Inactivity Timer) corresponding to DRX associated with multicast.

For example, active time of the DRX associated with multicast may include any one or more of the following: (time in which) the second timer corresponding to the DRX associated with multicast is running, and (time in which) the third timer corresponding to the DRX associated with multicast is running.

For example, a start moment of the third timer corresponding to the DRX associated with multicast may be determined based on some parameters.

For example, the active time of the DRX associated with multicast may include any one or more of the following: (time in which) the first timer (which may include a plurality of first timers corresponding to different HARQ processes) corresponding to the DRX associated with multicast is running, (time in which) the second timer corresponding to the DRX associated with multicast is running, and (time in which) the third timer corresponding to the DRX associated with multicast is running.

For example, the active time of the DRX associated with multicast may include any one or more of the following: (time in which) the first timer (which may include a plurality of first timers corresponding to different HARQ processes) corresponding to the DRX associated with multicast is running, (time in which) the second timer corresponding to the DRX associated with multicast is running, (time in which) the third timer corresponding to the DRX associated with multicast is running, and (time in which) the fourth timer (which may include a plurality of fourth timers corresponding to different HARQ processes) corresponding to the DRX associated with multicast is running.

For example, it may be understood that, if the network device expects to send the first control information and/or the first data, the network device needs to send the first control information and/or the first data in active time (all in active times corresponding to the DRX associated with the multicast) that are of a plurality of communication apparatuses (communication apparatuses that expect to receive the first data) and that are corresponding to the DRX associated with multicast, so that it is ensured that the plurality of communication apparatuses can receive the first control information and/or the first data. In other words, when one or more communication apparatuses are not in the active time, or one or more communication apparatuses are in inactive time (a sleep state) corresponding to the DRX associated with multicast, if the network device sends the first control information and/or the first data, the one or more communication apparatuses cannot receive the first control information and/or the first data. In other words, the network device sends the first control information and/or the first data in common time (which may be understood as an intersection set of active time corresponding to the DRX associated with multicast) of active time that is of all communication apparatuses that need to receive the first data and that corresponds to the DRX associated with multicast.

For example, for multicast data or data transmitted in the multicast manner, different communication apparatuses may have different receiving statuses (possible success and possible failure). Consequently, some communication apparatuses in these communication apparatuses start or restart the first timer, and some communication apparatuses do not start or restart the first timer. For example, if one or more communication apparatuses are in the active time because the first timer is running (where no other timer related to the active time corresponding to DRX associated with multicast is running), and one or more communication apparatuses are not in the active state, the network device cannot send the first control information and/or the first data.

For example, steps 900 and 901 may alternatively be understood as follows: The network device determines that newly transmitted multicast data or data transmitted in a multicast manner (for example, a PDSCH scrambled by using a G-RNTI) needs to be sent to all communication apparatuses in multicast. If at least one communication apparatus in the multicast runs under a RetransmissionTimer, considering that at least one communication apparatus in the multicast may not run under the RetransmissionTimer but is in a sleep period (where other timers related to active time corresponding to DRX associated with multicast are not running), in this case, the network device may not send the newly transmitted data to all the communication apparatuses in the multicast. On the contrary, if none of the communication apparatuses in the multicast runs under a RetransmissionTimer, the network device may consider that all the communication apparatuses are in an active period, that is, active periods of all the communication apparatuses are aligned. In this case, the network device sends newly transmitted data to the communication apparatus in the multicast only when all the communication apparatuses in the multicast are in the active period, so that all the communication apparatuses in the multicast can receive the newly transmitted data.

For example, in step 900, that the network device determines that the first timer on the communication apparatus side is running may be understood as that the network device determines that only the first timer of the at least one communication apparatus in the multicast is running and/or determines that the first timer of the at least one communication apparatus in the multicast is not running, and neither the second timer nor the third timer of the at least one communication apparatus is running. In this case, the network device performs step 901.

It should be noted that Embodiment 2.2 is also applicable to a scenario in which multicast data is transmitted between communication apparatuses or data is transmitted in the multicast manner between communication apparatuses. The network device in the foregoing content is replaced with a first communication apparatus, and the communication apparatus is replaced with a second communication apparatus for understanding. For example, when a communication apparatus serving as a transmit end determines that at least one first timer of a communication apparatus serving as a receive end in the multicast is running and/or determines that at least one first timer of the communication apparatus serving as the receive end in the multicast is not running, the communication apparatus serving as the transmit end determines not to send new data, where the new data is multicast data.

For example, it may also be understood as follows: If the communication apparatus serving as the transmit end needs to send newly transmitted multicast data, the communication apparatus serving as the transmit end sends the data within "active time" of DRX corresponding to the data. That is, if none of other timers (OnDuration Timer, Inactivity Timer, and HARQ-RTT-Timer) of one communication apparatus in communication apparatuses used as the receive end runs, and only the RetransmissionTimer runs, the communication apparatus used as the transmit end does not send the newly transmitted multicast data.

### Embodiment 3.1

In a current technology, if a communication apparatus initiates random access, a downlink BWP needs to be switched to a BWP corresponding to an uplink BWP. For example, when the uplink BWP is switched to an uplink initial BWP, the downlink BWP also needs to be switched to a downlink initial BWP; or the downlink BWP also needs to be switched to a downlink BWP whose identifier corresponds to an identifier of a first uplink BWP. However, in the MBS, if a resource of the downlink BWP after switching does not include an MBS common frequency resource (common frequency resource), the communication apparatus cannot receive MBS data from a network device on the downlink BWP after switching. In addition, when the network device does not know that the communication apparatus performs downlink BWP switching, the network device still sends the MBS data on a BWP before downlink switching, and the communication apparatus cannot receive the MBS data.

For example, if the communication apparatus initiates CBRA, the communication apparatus is caused to perform downlink BWP switching. The network device does not know that the communication apparatus is switched from a downlink BWP 1 to a downlink BWP 2, and the network device still sends data to the communication apparatus in a PTP transmission manner on the downlink BWP 1 before switching. However, the communication apparatus has switched to the downlink BWP 2, and therefore the communication apparatus cannot receive the data.

Alternatively, if the communication apparatus initiates the CBRA, the communication apparatus is caused to perform downlink BWP switching. The network device does not know that the communication apparatus is switched from the downlink BWP 1 to the downlink BWP 2. Because the downlink BWP 2 does not include the MBS common frequency resource, the communication apparatus cannot receive the MBS data (for example, data transmitted in a PTM transmission manner).

Alternatively, if the communication apparatus initiates the CFRA, the communication apparatus is caused to perform downlink BWP switching from the downlink BWP 1 to the downlink BWP 2. The network device may determine a communication apparatus that initiates random access, and may determine that the communication apparatus switches to the downlink BWP 2. If the network device sends data to the communication apparatus in the PTP manner, the communication apparatus may receive, on the downlink BWP 2, the data transmitted in the PTP manner. If the network device sends data to the communication apparatus in the PTM manner, but the downlink BWP 2 does not include the MBS common frequency resource, the communication apparatus cannot receive, on the downlink BWP 2, the data transmitted in the PTM manner.

Alternatively, based on the foregoing example in which the MBS data cannot be received, in general, if the communication apparatus switches to a downlink BWP that does not include the MBS common frequency resource, the communication apparatus may not receive downlink data on the downlink BWP after switching.

It may be understood that, in the foregoing example, a scenario in which the communication apparatus initiates random access and cannot receive the MBS data is that: Not all downlink BWPs (downlink unicast BWPs) include the MBS common frequency resource.

In the foregoing case, if the communication apparatus still listens to the MBS data/DCI corresponding to the MBS data (where the listening is meaningless), power consumption is high.

To resolve the foregoing problem, this application provides a DRX control method. When a communication apparatus initiates random access, if the communication apparatus determines that a downlink BWP to be switch to or a downlink BWP that has been switched to does not include the MBS common frequency resource, the communication apparatus may enter a sleep period, or may not listen to downlink control information associated with multicast, to skip receiving downlink control information or downlink data transmitted in a multicast manner. In this way, the communication apparatus can be prevented from listening to unnecessary downlink control information, and power consumption is reduced by using the communication apparatus.

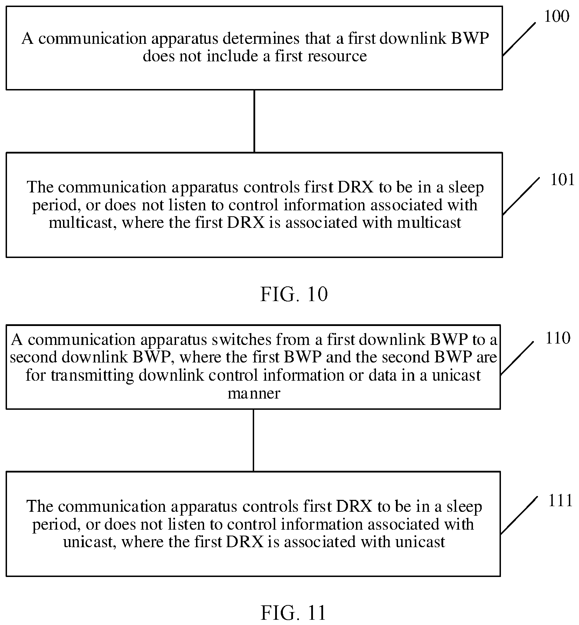

Based on this, this application provides a DRX control method. As shown in FIG. 10, the method includes the following steps.

100: A communication apparatus determines that a first downlink BWP does not include a first resource.

**The first resource may be/be used for/be understood as any one or more of the following: a resource used for control information (for example, a PDCCH, a common PDCCH, or a group common PDCCH) and/or data (for example, a PDSCH, a common PSCCH, or a group common PDSCH) transmitted in a multicast manner, a common frequency resource or a common frequency resource corresponding to multicast,** and a resource used for a common PDCCH and a common PDSCH, for example, a common frequency resource.

The common frequency resource or the common frequency resource corresponding to multicast may be understood as a BWP corresponding to multicast, or a frequency range corresponding to multicast.

**The first downlink BWP is an active downlink BWP, or the communication apparatus is to switch to the first downlink BWP.**

For example, the first downlink BWP is/includes a downlink BWP corresponding to unicast, or an initial downlink BWP.

For example, switching to the first downlink BWP may be understood as activating the first downlink BWP.

**That the first downlink BWP does not include the first resource may be understood as any one or more of the following: The first downlink BWP does not include the first resource, the first downlink BWP cannot cover the first resource, and the first resource is not completely in a frequency domain range of the first downlink BWP.**

When the first downlink BWP does not include the first resource, a relationship between the first downlink BWP and the first resource may include a relationship of having an intersection and a relationship of not having an intersection.

Boundaries of the first downlink BWP are a first boundary and a second boundary, and the first boundary is smaller than the second boundary. Boundaries of the first resource are a third boundary and a fourth boundary, and the third boundary is smaller than the fourth boundary. Optionally, the first boundary/the third boundary may be referred to as a left boundary or a lower boundary. Optionally, the second boundary/the fourth boundary may be referred to as a right boundary or an upper boundary.

The boundary may be understood as a frequency range boundary, a frequency boundary, or a frequency start point.
(1) The relationship of having an intersection: There is an intersection between the first downlink BWP and the first resource.

That there is an intersection between the first downlink BWP and the first resource may be understood as any one of the following:
(a) The third boundary is larger than the first boundary and smaller than the second boundary, and the fourth boundary is larger than the second boundary.
(b) The first boundary is larger than the third boundary and smaller than the fourth boundary, and the second boundary is larger than the fourth boundary.

(2) The relationship of not having an intersection: There is no intersection between the first downlink BWP and the first resource.

That there is no intersection between the first downlink BWP and the first resource may be understood as any one of the following:
(a) The third boundary is larger than or equal to the second boundary.
(b) The first boundary is larger than or equal to the fourth boundary.

**101: The communication apparatus controls first DRX to be in a sleep period, or does not to listen to the control information associated with multicast, where the first DRX is associated with multicast.**

Not listening may include stopping listening.

In some embodiments, in step 100, the communication apparatus may determine that the first BWP does not include the first resource when the communication apparatus switches to the first downlink BWP; or when the communication apparatus is to switch to the first downlink BWP but has not been switched to the first downlink BWP.

The first resource is associated with first multicast (service) or a first RNTI (for example, a specific G-RNTI).

The first DRX is associated with first multicast (service) or a first RNTI (for example, a specific G-RNTI).

It may be understood that the first DRX is associated with a service corresponding to the first resource, or a first RNTI.

**Optionally, this application further includes: The communication apparatus initiates random access (for example, CBRA or CFRA), and the communication apparatus switches to/is to switch to the first downlink BWP.**

The first downlink BWP is a downlink BWP corresponding to a first uplink BWP.

For example, the first downlink BWP is an initial downlink BWP, and the first uplink BWP is an initial uplink BWP. Alternatively, for example, an identifier of the first downlink BWP is the same as an identifier of the first uplink BWP.

For example, the communication apparatus initiates random access. In this case, an active uplink BWP is a second uplink BWP. If the communication apparatus determines that the second uplink BWP does not have a PRACH resource, when the communication apparatus switches the uplink BWP to the initial uplink BWP, that is, the first uplink BWP is the initial uplink BWP, in this case, the communication apparatus also needs to switch from the downlink BWP to the initial downlink BWP, where the first downlink BWP is the initial downlink BWP.

The PRACH resource may be understood as a PRACH occasion.

That the second uplink BWP does not have a PRACH resource may be understood as that the PRACH resource is not configured for the second uplink BWP.

Alternatively, for example, the communication apparatus initiates random access. In this case, the active uplink BWP is the first uplink BWP. If the communication apparatus determines that the first uplink BWP has a PRACH resource, when an identifier corresponding to the active downlink BWP (for example, the active downlink BWP in this case is a third downlink BWP) is different from an identifier (for example, a BWP-ID) corresponding to the first uplink BWP, in this case, the communication apparatus needs to switch from the downlink BWP to the first downlink BWP, where the identifier of the first downlink BWP is the same as the identifier of the first uplink BWP.

That the first uplink BWP has a PRACH resource may be understood as that the PRACH resource is configured for the first uplink BWP.

**Optionally, that the communication apparatus controls first DRX to be in a sleep period may include: The communication apparatus stops a timer corresponding to the first DRX.**

When a timer of the first DRX is not running, the communication apparatus further does not need to listen to control information associated with multicast. For example, the communication apparatus does not need to listen to DCI scrambled by using the second RNTI (for example, a G-RNTI), and/or a PDCCH (where for example, some DCI formats may not need to be listened to) that is related to the MBS and that is scrambled by using the first RNTI (for example, a C-RNTI), so that power consumption of the communication apparatus can be reduced.

For example, the communication apparatus initiates the CBRA in the MBS. Consequently, the communication apparatus determines to switch to the first downlink BWP or has switched to the first downlink BWP. In this case, when the communication apparatus determines that the first downlink BWP does not include the MBS common frequency resource, the communication apparatus stops all running timers in the first DRX used for the MBS. The timers may include, for example, an OnDuration Timer, an Inactivity Timer, a HARQ-RTT-Timer, and a RetransmissionTimer. In this way, the communication apparatus is equivalent to entering the sleep period, and does not receive downlink control information and downlink data related to the MBS.

For example, that the communication apparatus does not listen to the control information associated with multicast may be as follows: The communication apparatus initiates the CBRA in the MBS, so that the communication apparatus determines to switch to the first downlink BWP or has switched to the first downlink BWP. In this case, when the communication apparatus determines that the first downlink BWP does not include the MBS common frequency resource, the communication apparatus does not listen to DCI scrambled by using the first RNTI (for example, a C-RNTI) and/or a PDCCH (for example, a specific DCI format) that is scrambled by using the first RNTI (for example, a C-RNTI) and that is related to the MBS. In this case, the running timer in the first DRX may stop timing, or may continue timing, but the communication apparatus does not listen to the DCI.

Optionally, the communication apparatus does not listen to the control information associated with multicast. If the HARQ-RTT-Timer in the first DRX expires in this case, the communication apparatus may also control the RetransmissionTimer in the first DRX not to be started, to reduce power consumption of the communication apparatus.

In some embodiments, the communication apparatus may determine, when the communication apparatus initiates the CFRA, and consequently the communication apparatus is to switch to the first downlink BWP or has switched to the first BWP, that the first downlink BWP does not include the MBS common frequency resource. In this case, the communication apparatus may control the first DRX to be in the sleep period, or may not listen to the control information associated with multicast.

In some embodiments, the communication apparatus may determine, when the communication apparatus receives a switching indication, that the first downlink BWP does not include the MBS common frequency resource, where the switching indication indicates the communication apparatus to switch to the first BWP. In this case, the communication apparatus may control the first DRX to be in the sleep period, or may not listen to the downlink control information associated with multicast.

The foregoing describes the process in which the communication apparatus may enter the sleep period to reduce power consumption. The communication apparatus may enter an active period of the first DRX or (start to) listen to the downlink control information associated with multicast in the following scenarios.

It should be noted that "the communication apparatus controls the first DRX to be in the active period, or listens, based on the first DRX, to the control information associated with multicast", or "enters the active period of the first DRX or listens (starts to listen) to the downlink control information associated with multicast" does not mean that the communication apparatus is always in the active time of the DRX, or always listens to the control information. The communication apparatus still determines actual DRX active time and controls listening based on a DRX parameter and a receiving status.

**Optionally, when the communication apparatus sends a message 3 in a random access procedure, where the message 3 is used for scheduled transmission (scheduled transmission) and carries an identifier of the communication apparatus, the communication apparatus controls the first DRX to be in an active period, or listens, based on the first DRX, to control information associated with multicast.**

The identifier of the communication apparatus may include any one or more of the following: a 5GS-TMSI, a C-RNTI, and a random value.

This is because the network device may determine, based on the message 3, an identity of the communication apparatus, and know which communication apparatus performs random access, and the network device may also determine the first downlink BWP after the communication apparatus switches. In this case, when sending control information or data (for example, MBS data transmitted in a PTP transmission manner) to the communication apparatus, the network device may send the control information or the data on the first downlink BWP, and the communication apparatus may also receive the control information or the data on the first downlink BWP.

The message 3 may be understood as the foregoing MSG 3. The message 3 may also be understood as first scheduled transmission in the random access process.

**In some embodiments, when the communication apparatus determines that random access succeeds, the communication apparatus may control the first DRX to be in the active period, or may listen, based on the first DRX, to the control information associated with multicast.**

The communication apparatus may alternatively fail to send the message 3. To more reliably determine that the network device identifies the communication apparatus, the communication apparatus may determine that random access succeeds, and then the MSG 3 is definitely received by the network device. In this case, the network device may determine the identity of the communication apparatus, and determine a downlink BWP currently activated by the communication apparatus. When the network device sends control information or data (for example, MBS data transmitted in a PTP transmission manner) to the communication apparatus, the network device may send the control information or data on the first downlink BWP, and the communication apparatus may also receive the control information or data on the first downlink BWP. Therefore, the communication apparatus may control the first DRX to be in an active period, or may listen, based on the first DRX, to the downlink control information associated with multicast.

That the communication apparatus determines that the random access succeeds may include/be understood as that: The communication apparatus receives a fourth message in the random access procedure, and the fourth message may be understood as the foregoing MSG 4.

**In some embodiments, the communication apparatus may further switch to a second downlink BWP, where the second BWP includes the first resource; and the communication apparatus controls the first DRX to be in the active period, or listens, based on the first DRX, to the control information associated with multicast.**

That the second downlink BWP includes the first resource may be understood as any one or more of the following: The second downlink BWP includes the first resource, the second downlink BWP can cover the first resource, and the first resource is completely in a frequency domain range of the second downlink BWP.

Boundaries of the second downlink BWP are a fifth boundary and a sixth boundary, and the fifth boundary is smaller than the sixth boundary. Boundaries of the first resource are a third boundary and a fourth boundary, and the third boundary is smaller than the fourth boundary. Optionally, the fifth boundary/the third boundary may be referred to as a left boundary or a lower boundary. Optionally, the sixth boundary/the fourth boundary may be referred to as a right boundary or an upper boundary.

The boundary may be understood as a frequency range boundary, a frequency boundary, or a frequency start point.

When the second downlink BWP includes the first resource, a relationship between the second downlink BWP and the first resource may include an inclusion relationship and an equal relationship.
(1) The inclusion relationship: The second downlink BWP includes the first resource.

That the second downlink BWP includes the first resource may be understood as follows: The third boundary is larger than or equal to the fifth boundary, and the fourth boundary is smaller than or equal to the sixth boundary.

(2) The equal relationship: The second downlink BWP is equal to the first resource.

That the second downlink BWP is equal to the first resource may be understood as follows: The fifth boundary is equal to the third boundary, and the sixth boundary is equal to the fourth boundary.

For example, that the communication apparatus controls the first DRX to be in the active period may include: The communication apparatus starts the timer corresponding to the first DRX. For example, the timer corresponding to the first DRX includes one or more of the OnDuration Timer, the Inactivity Timer, the HARQ-RTT-Timer, and the RetransmissionTimer. In this way, the communication apparatus may continue to control the timer in the first DRX based on a period condition and downlink reception of the first DRX.

Alternatively, that the communication apparatus controls the first DRX to be in the active period may include: The communication apparatus continues listening, based on an active time (active period) in the first DRX, to a PDCCH scrambled by using the second RNTI (for example, a G-RNTI) and/or a PDCCH that is related to the MBS and that is scrambled by using the first RNTI (for example, a C-RNTI).

In some embodiments, the control information associated with multicast includes any one or more of the following: control information transmitted in a multicast manner, control information transmitted in a unicast manner, control information for scheduling multicast data, control information for scheduling data transmitted in the multicast manner, control information for scheduling multicast data transmitted in the unicast manner, and control information for scheduling multicast configuration information. For a specific understanding herein, refer to the descriptions in Embodiments 1.1 and 1.2 above.

For example, the multicast configuration information may be understood as an MCCH message.

For example, the control information may be understood as DCI.

It should be noted that, in the foregoing explanations of step 101, if the communication apparatus is receiving a plurality of MBS services (a plurality of multicast services), and the plurality of MBS services are all associated with the first resource, the timer stopped by the communication apparatus and the downlink control information that is not listened to by the communication apparatus may be understood as being corresponding to the plurality of MBS services. That is, all timers in DRX corresponding to the plurality of MBSs need to be stopped, and all behavior of listening to downlink control information based on DRX of the plurality of MBSs need to be stopped.

### Embodiment 3.2

Similar to Embodiment 3.1, if a communication apparatus initiates random access, a downlink BWP needs to be switched to a BWP corresponding to an uplink BWP. For example, when the uplink BWP is switched to an uplink initial BWP, the downlink BWP also needs to be switched to a downlink initial BWP; or the downlink BWP also needs to be switched to a downlink BWP whose identifier corresponds to an identifier of a first uplink BWP. However, in a unicast service, a network device does not know that the communication apparatus performs downlink BWP switching, and the network device still sends data to the communication apparatus on the downlink BWP before switching. In this case, the communication apparatus cannot receive the data.

For example, if the communication apparatus initiates CBRA, the communication apparatus is caused to perform downlink BWP switching. The network device does not know that the communication apparatus is switched from a downlink BWP 1 to a downlink BWP 2, and the network device still sends data to the communication apparatus in a PTP transmission manner on the downlink BWP 1 before switching. However, the communication apparatus has switched to the downlink BWP 2, and therefore the communication apparatus cannot receive the data.

In the foregoing case, if the communication apparatus still listens to DCI corresponding to the unicast data (where the listening is meaningless), power consumption is high.

To resolve the problem in the unicast service, this application provides a DRX control method. When a communication apparatus initiates random access, if the communication apparatus determines a downlink BWP to be switched to or a downlink BWP that has been switched to, the communication apparatus may enter a sleep period, or may not listen to downlink control information associated with unicast, to skip receiving the downlink control information or downlink data transmitted in the unicast manner. This can prevent the communication apparatus from listening to unnecessary downlink control information, and facilitate reducing power consumption of the communication apparatus.

Therefore, an embodiment of this application provides a DRX control method. As shown in FIG. 11, the method includes the following steps.

**110: A communication apparatus switches from a first downlink BWP to a second downlink BWP, where the first BWP and the second BWP are for transmitting downlink control information or data in a unicast manner.**

For example, the first downlink BWP and/or the second downlink BWP is/includes a downlink BWP corresponding to unicast, or an initial downlink BWP.

For example, switching from the first downlink BWP to the second downlink BWP may be understood as deactivating the first downlink BWP and activating the second downlink BWP.

**111: The communication apparatus controls first DRX to be in a sleep period, or does not listen to the control information associated with unicast, where the first DRX is associated with unicast.**

Not listening may include stopping listening.

For example, the downlink BWP in step 110 may be switched in a case of CBRA. That is, when the communication apparatus initiates the CBRA, the communication apparatus switches from the first BWP to the second BWP. It may be understood that the second downlink BWP is a downlink BWP corresponding to the active first uplink BWP.

For example, the second downlink BWP is the initial downlink BWP, and the first uplink BWP is an initial uplink BWP. Alternatively, for example, an identifier of the second downlink BWP is the same as an identifier of the first uplink BWP. For specific descriptions herein, refer to the foregoing descriptions of steps 100 and 101.

For example, for a specific implementation in which the communication apparatus controls the first DRX to be in the sleep period, refer to the foregoing descriptions of steps 100 and 101. A difference lies in that the first DRX is associated with unicast, and timers in the first DRX are all timers in the unicast service.

**This application further includes: The communication apparatus initiates random access (for example, CBRA or CFRA), and the communication apparatus switches to/is to switch to the second downlink BWP.**

For example, that the communication apparatus stops listening to downlink control information for scheduling unicast data may be as follows: The communication apparatus stops listening to DCI scrambled by using a unicast RNTI, where the unicast RNTI may be, for example, a C-RNTI.

**Optionally, that the communication apparatus controls first DRX to be in a sleep period may include: The communication apparatus stops a timer corresponding to the first DRX.**

For example, if a HARQ-RTT-Timer is running when the communication apparatus switches to the second downlink BWP, the communication apparatus does not start a RetransmissionTimer until the HARQ-RTT-Timer expires, to save power consumption of the communication apparatus.

The foregoing describes the process in which the communication apparatus may enter the sleep period to reduce power consumption. The communication apparatus may control the first DRX to be in an active period again or (start to) listen, based on the first DRX, to the downlink control information associated with unicast again in the following scenarios.

Optionally, the communications apparatus sends the message 3 in the CBRA procedure, and **the message 3 is used for scheduled transmission (scheduled transmission).** In this case, the network device may determine an identity of the communication apparatus based on the message 3, and further determine that the communication apparatus switches to the second downlink BWP. Therefore, the communication apparatus may control the first DRX to be in the active period, or may listen, based on the first DRX, to the control information associated with unicast.

For example, the communication apparatus starts the timer in the first DRX, including one or more of the OnDuration Timer, the Inactivity Timer, the HARQ-RTT-Timer, and the RetransmissionTimer. Alternatively, the communication apparatus may continue listening to the downlink control information based on the active period of the first DRX, for example, continue listening to the DCI scrambled by using the C-RNTI.

For example, the downlink control information for scheduling unicast data includes any one or more of the following:
downlink control information transmitted in a unicast manner, downlink control information for scheduling data transmitted in the unicast manner, and downlink control information for scheduling unicast data transmitted in the unicast manner.

Therefore, in the unicast service, if the communication apparatus switches to the downlink BWP in a CBRA process, the communication apparatus may control the first DRX to be in the sleep period, or stop listening to the downlink control information for scheduling unicast data, to prevent the communication apparatus from performing unnecessary DCI listening, and save power consumption.

It should be noted that the DRX control methods provided in embodiments of this application may be performed separately, or may be performed with reference to at least two of the methods. This is not limited in this application.

It may be understood that, to implement the foregoing functions, the communication apparatus includes a corresponding hardware and/or software module for performing each function. With reference to the examples described in embodiments disclosed in this specification, algorithm steps may be implemented by hardware or a combination of hardware and computer software in this application. Whether a function is executed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of this application.

In the embodiments, the communication apparatus may be divided into function modules based on the foregoing method examples. For example, each function module may be obtained through division based on each corresponding function, or two or more functions may be integrated into one processing module. The integrated module may be implemented in a form of hardware. It should be noted that, in the embodiments, division into the modules is an example, and is merely a logical function division. During actual implementation, another division manner may be used.

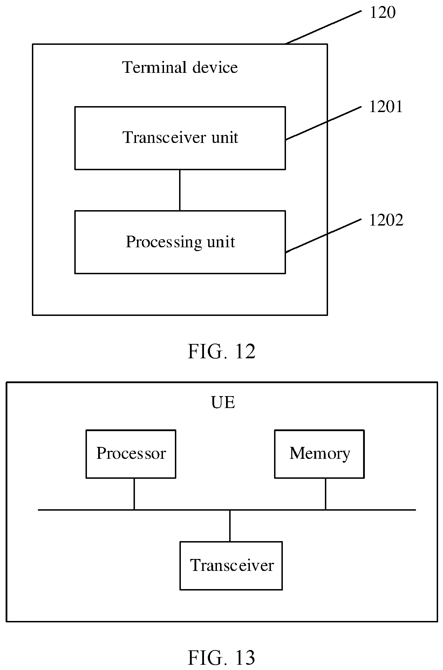

In a case that functional modules are obtained through division based on corresponding functions, FIG. 12 shows a possible schematic composition diagram of the communication apparatus in the foregoing embodiments. The communication apparatus may be the foregoing terminal device or UE. The terminal device is used as an example. As shown in FIG. 12, a terminal device 120 may include a transceiver unit 1201 and a processing unit 1202.

The transceiver unit 1201 may be configured to support the terminal device 120 in performing the foregoing step 501, step 601, step 800, and the like, and/or is configured to perform another process of the technology described in this specification.

The processing unit 1202 may be configured to support the terminal device 170 in performing the foregoing steps 502 (502-1, 502-2, 502-2A, 502-3, 502-4, 502-5, 502-5A, 502-6), 602 (602-1, 602-2, 602-2A, 602-4, 602-5, and 602-5A), 801, 100, 101, 110, 111, and the like, and/or is configured to perform another process of the technology described in this specification.

It should be noted that all related content of the steps in the foregoing method embodiments may be cited in function descriptions of corresponding functional modules. Details are not described herein again.

The terminal device 120 provided in this embodiment is configured to perform the foregoing DRX control method, and therefore can achieve the same effect as the foregoing implementation.

When an integrated unit is used, the terminal device may include a processing module, a storage module, and a communications module. The processing module may be configured to control and manage an action of the terminal device. For example, the processing module may be configured to support the terminal device 120 in performing the step performed by the processing unit 1202. The storage module may be configured to support the terminal device in storing program code, data, and the like. The communication module may be configured to support communication between the terminal device and another device, for example, communication between the terminal device and a radio access device.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a digital signal processor (digital signal processor, DSP) and a microprocessor. The storage module may be a memory. The communication module may be specifically a device, such as a radio frequency circuit, a Bluetooth chip, or a Wi-Fi chip, that interacts with another electronic device.

In an embodiment, when the processing module is a processor, the storage module is a memory, and the transceiver module is a transceiver, the terminal device in the embodiments may be UE with the structure shown in FIG. 13.

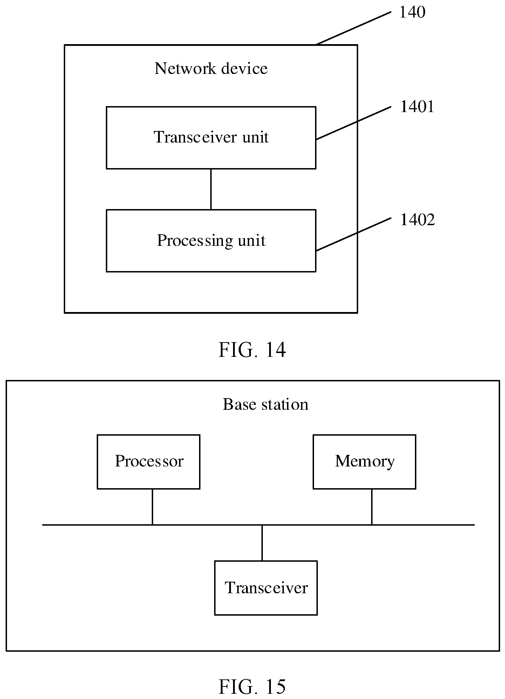

In a case that functional modules are obtained through division based on corresponding functions, FIG. 14 shows a possible schematic composition diagram of the network device in the foregoing embodiments. The network device may be the foregoing base station or the like. The network device is used as an example. As shown in FIG. 14, a network device 140 may include a transceiver unit 1401 and a processing unit 1402.

The transceiver unit 1401 may be configured to support the network device 140 in performing the foregoing steps 501, 121, and the like, and/or is configured to perform another process of the technology described in this specification.

The processing unit 1402 may be configured to support the network device 140 in performing the foregoing steps 900, 901, and the like, and/or is configured to perform another process of the technology described in this specification.

It should be noted that all related content of the steps in the foregoing method embodiments may be cited in function descriptions of corresponding functional modules. Details are not described herein again.

The network device 140 provided in this embodiment is configured to perform the foregoing DRX control method, and therefore can achieve the same effect as the foregoing implementation.

When an integrated unit is used, the network device may include a processing module, a storage module, and a communication module. The processing module may be configured to control and manage an action of the terminal device. For example, the processing module may be configured to support the network device in performing the step performed by the processing unit 1402. The storage module may be configured to support the network device in storing program code, data, and the like. The communication module may be configured to support communication between the network device and another device, for example, communication between the network device and a terminal device.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a digital signal processor (digital signal processor, DSP) and a microprocessor. The storage module may be a memory. The communication module may be specifically a device, such as a radio frequency circuit, a Bluetooth chip, or a Wi-Fi chip, that interacts with another electronic device.

In an embodiment, when the processing module is a processor, and the storage module is a memory, the terminal device in the embodiments may be a base station with the structure shown in FIG. 15.

An embodiment of this application further provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the foregoing related method steps to implement the DRX control method in the foregoing embodiments.

An embodiment of this application further provides a computer storage medium. The computer storage medium stores computer instructions. When the computer instructions are run on an electronic device, the electronic device is enabled to perform the foregoing related method steps to implement the DRX control method in the foregoing embodiments.

An embodiment of this application further provides a computer program product. When the computer program product runs on a computer, the computer is enabled to perform the foregoing related method steps to implement the DRX control method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computerexecutable instructions. When the apparatus runs, the processor may execute the computerexecutable instructions stored in the memory, so that the chip performs the DRX control method performed by the electronic device in the foregoing method embodiments.

The electronic device, the computer storage medium, the computer program product, and the chip provided in the embodiments are all configured to perform the methods provided above. Therefore, for beneficial effects that can be achieved thereof, refer to the beneficial effects corresponding to the methods provided above. Details are not described herein again.

The foregoing descriptions about implementations allow a person skilled in the art to understand that, for convenient and brief description, division into the foregoing functional modules is taken as an example for illustration. In actual application, the foregoing functions can be allocated to different modules and implemented based on a requirement, in other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve objectives of the solutions of the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of this application essentially, or the part contributing to the current technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

The foregoing content is merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A **discontinuous reception DRX control method, wherein the method comprises:**
receiving, by a communication apparatus, first control information transmitted in a unicast manner, wherein the first control information is for scheduling first data transmitted in a multicast manner; and/or receiving, by the communication apparatus, the first data, wherein the first data is transmitted in the multicast manner; and
performing, by the communication apparatus, any one or more of the following actions:
starting or restarting a first timer, wherein the first timer indicates duration after newly transmitted control information or newly transmitted data is scheduled;
stopping a second timer, or starting or restarting a second timer, wherein the second timer indicates duration in which the communication apparatus receives retransmitted data; and
starting or restarting a third timer, wherein the third timer indicates waiting duration before the communication apparatus receives the retransmitted data, wherein
the first timer, the second timer, and the third timer are timers corresponding to DRX associated with multicast.

2. The method according to claim 1, wherein the starting or restarting a first timer comprises:
when the first data is newly transmitted data, starting or restarting the first timer.

3. The method according to claim 1 or 2, wherein the starting or restarting a third timer comprises:
sending, by the communication apparatus, first feedback information, wherein the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and
starting or restarting, by the communication apparatus, the third timer.

4. The method according to any one of claims 1 to 3, wherein the method further comprises:
performing, by the communication apparatus, any one or more of the following actions:
starting or restarting a fourth timer, wherein the fourth timer indicates duration after newly transmitted control information or newly transmitted data is scheduled;
stopping a fifth timer, or starting or restarting a fifth timer, wherein the fifth timer indicates duration in which the communication apparatus receives retransmitted data; and
starting or restarting a sixth timer, wherein the sixth timer indicates waiting duration before the communication apparatus receives the retransmitted data, wherein
the fourth timer, the fifth timer, and the sixth timer are all timers corresponding to DRX associated with unicast.

5. The method according to claim 4, wherein
any one or more of the first control information, the first data, the second timer, and the third timer correspond to a first hybrid automatic repeat request HARQ process; and/or
any one or more of the first control information, the first data, the fifth timer, and the sixth timer correspond to the first HARQ process.

6. A discontinuous reception DRX control method, wherein the method comprises:
receiving, by a communication apparatus, first control information transmitted in a multicast manner, wherein the first control information is for scheduling first data transmitted in the multicast manner; and/or receiving, by the communication apparatus, the first data, wherein the first data is transmitted in a unicast manner; and
performing, by the communication apparatus, any one or more of the following actions:
starting or restarting a fourth timer, wherein the fourth timer indicates duration after newly transmitted control information or newly transmitted data is scheduled; and
stopping a fifth timer, or starting or restarting a fifth timer, wherein the fifth timer indicates duration in which the communication apparatus receives retransmitted data, wherein
the fourth timer and the fifth timer are both timers in DRX associated with a unicast service.

7. The method according to claim 6, wherein the starting or restarting a fourth timer comprises:
when the communication apparatus determines that the first data is newly transmitted data, starting or restarting the fourth timer.

8. The method according to claim 6 or 7, wherein the method further comprises:
performing, by the communication apparatus, any one or more of the following actions:
starting or restarting a first timer, wherein the first timer indicates duration after a newly transmitted control channel or newly transmitted data is scheduled; and
stopping a second timer, or starting or restarting a second timer, wherein the second timer indicates duration in which the communication apparatus receives retransmitted data, wherein
the first timer and the second timer are timers corresponding to DRX associated with multicast.

9. The method according to any one of claims 6 to 8, wherein the first data and the fifth timer both correspond to a same hybrid automatic repeat request HARQ process.

10. A communication apparatus, comprising:
a transceiver, configured to receive first control information transmitted in a unicast manner, wherein the first control information is for scheduling first data transmitted in a multicast manner; and/or a transceiver, configured to receive the first data, wherein the first data is transmitted in the multicast manner; and
a processor, configured to perform any one or more of the following actions:
starting or restarting a first timer, wherein the first timer indicates duration after newly transmitted control information or newly transmitted data is scheduled;
stopping a second timer, or starting or restarting a second timer, wherein the second timer indicates duration in which the communication apparatus receives retransmitted data; and
starting or restarting a third timer, wherein the third timer indicates waiting duration before the communication apparatus receives the retransmitted data, wherein
the first timer, the second timer, and the third timer are timers corresponding to DRX associated with multicast.

11. The communication apparatus according to claim 10, wherein the processor is configured to:
when the first data is newly transmitted data, start or restart the first timer.

12. The communication apparatus according to claim 10 or 11, wherein the transceiver is configured to:
send first feedback information, wherein the first feedback information indicates that the communication apparatus successfully receives or fails to receive the first data; or at first feedback time, after first feedback time, or before first feedback time, the first feedback time is a time domain position at which a first feedback resource is located, and the first feedback resource is associated with first data; and
the processor is configured to start or restart the third timer.

13. The communication apparatus according to any one of claims 10 to 12, wherein the processor is further configured to:
perform any one or more of the following actions:
starting or restarting a fourth timer, wherein the fourth timer indicates duration after newly transmitted control information or newly transmitted data is scheduled;
stopping a fifth timer, or starting or restarting a fifth timer, wherein the fifth timer indicates duration in which the communication apparatus receives retransmitted data; and
starting or restarting a sixth timer, wherein the sixth timer indicates waiting duration before the communication apparatus receives the retransmitted data, wherein
the fourth timer, the fifth timer, and the sixth timer are all timers corresponding to DRX associated with unicast.

14. The communication apparatus according to claim 13, wherein
any one or more of the first control information, the first data, the second timer, and the third timer correspond to a first hybrid automatic repeat request HARQ process; and/or
any one or more of the first control information, the first data, the fifth timer, and the sixth timer correspond to the first HARQ process.

15. A communication apparatus, comprising:
a transceiver, configured to receive first control information transmitted in a multicast manner, wherein the first control information is for scheduling first data transmitted in the multicast manner; and/or a transceiver, configrued to receive the first data, wherein the first data is transmitted in a unicast manner; and
a processor, configured to perform any one or more of the following actions:
starting or restarting a fourth timer, wherein the fourth timer indicates duration after a newly transmitted control channel or newly transmitted data is scheduled; and
stopping a fifth timer, or starting or restarting a fifth timer, wherein the fifth timer indicates duration in which the communication apparatus receives retransmitted data, wherein
the fourth timer and the fifth timer are both timers in DRX associated with a unicast service.

16. The communication apparatus according to claim 15, wherein the processor is configured to:
when determining that the first data is newly transmitted data, start or restart the fourth timer.

17. The communication apparatus according to claim 15 or 16, wherein the transceiver is further configured to:
send first feedback information, wherein the first feedback information indicates that the communication apparatus successfully receives or fails to receive the first data; or at first feedback time or after first feedback time, the first feedback time is maximum duration in which the communication apparatus sends a data feedback to a network device.

18. The communication apparatus according to claim 17, wherein the processor is further configured to:
perform any one or more of the following actions:
starting or restarting a first timer, wherein the first timer indicates duration after a newly transmitted control channel or newly transmitted data is scheduled; and
stopping a second timer, or starting or restarting a second timer, wherein the second timer indicates duration in which the communication apparatus receives retransmitted data, wherein
the first timer and the second timer are timers corresponding to DRX associated with multicast.

19. The communication apparatus according to any one of claims 15 to 18, wherein the first data and the fifth timer both correspond to a same hybrid automatic repeat request HARQ process.

20. A computer-readable storage medium, comprising computer instructions, wherein when the computer instructions are run on an electronic device, the electronic device is enabled to perform the method according to any one of claims 1 to 9.

21. A computer program product, wherein when the computer program product runs on a computer, an electronic device is enabled to perform the method according to any one of claims 1 to 9.
